# EUROPEAN PATENT SPECIFICATION

(11) **EP 4 063 209 B1**
(45) Date of publication and mention of the grant of the patent: **24.04.2024**
(21) Application number: 22163024.7
(22) Date of filing: 18.03.2022
(51) Int. Cl.: B60T 13/66, B60T 13/68, B60T 15/02, B60T 8/34, B60T 8/36

(54) **BRAKE CONTROL DEVICE AND METHOD OF MANUFACTURING BRAKE CONTROL DEVICE**
BREMSSTEUERUNGSVORRICHTUNG UND VERFAHREN ZUR HERSTELLUNG EINER BREMSSTEUERUNGSVORRICHTUNG
DISPOSITIF DE COMMANDE DE FREIN ET PROCÉDÉ DE FABRICATION DE DISPOSITIF DE COMMANDE DE FREIN

(30) Priority: 22.03.2021 JP 2021047048; 06.08.2021 JP 2021130000
(43) Date of publication of application: 28.09.2022
(73) Proprietor: Nabtesco Corporation, Tokyo 102-0093 (JP)
(72) Inventor: Naoki, Shigeru, Tokyo, 102-0093 (JP); Kuromitsu, Masaru, Tokyo, 102-0093 (JP)
(74) Representative: Grünecker Patent- und Rechtsanwälte PartG mbB

(56) References cited:
- JP-A- 2005 067 312
- US-A- 4 598 953
- US-A- 5 454 399
- US-A- 5 788 343

## Description

### TECHNICAL FIELD

The present invention relates to a brake control device according to the preamble of claim 1, and a method of manufacturing a brake control device according to the preamble of claim 17.

### BACKGROUND

Such a brake control device and such a method of manufacturing a brake control device are known from US 5 454 399 A, which is regarded as the closest prior art.

There are conventionally known brake control devices as control devices of brake devices for braking (air-braking) railway vehicles. A brake control device includes: a tube seat having an input port for receiving compressed air from an air source; and a regulating valve for regulating the flow rate or pressure of the compressed air received through the input port to output working air for operating a brake device. For example, Patent Literature 1 discloses a brake control device including: a tube seat fixed to a frame; a valve block fixed to the tube seat; a plate fixed to the upper surface of the valve block; a variable load valve fixed to the valve block; and a controller for various controls related to braking. The tube seat of JP 2013 112307 A has a first surface and a second surface. The first surface has an external port connected to the air supply source and the brake side, and the second surface is connected to the valve block. In the tube seat, channels connecting between the respective ports of the first surface and the second surface are formed in a given route in accordance with the position of the valve block. There is also a known tube seat having air passages formed by drilling in a block material, or what is called a drilled tube seat.

### SUMMARY

However, a drilled tube seat may have an unwanted thickness left therein, depending on the aspect of the air passages formed in the tube seat. This should be overcome for densification and sophistication of the air passages. Therefore, there is a demand for a technique allowing the densification and sophistication of the channels.

The present invention is intended to overcome the above problem, and one object thereof is to provide a brake control device and a method of manufacturing a brake control device capable of densification and sophistication of the channels.

To overcome the above problems, the present invention provides a brake control device according to claim 1 and a method of manufacturing a brake control device according to claim 17.

With this configuration, since the channel connecting between the input port and the regulating valve is formed by the plurality of plate-shaped members, the channel can be positioned freely in three-dimensional arrangement. Therefore, the channel can be densified and sophisticated, as compared to the case where the channel is formed in a single-layer tube seat.

With this method, since the channel connecting between the input port and the regulating valve is formed by the plurality of plate-shaped members, the channel can be positioned freely in three-dimensional arrangement. Therefore, the channel can be densified and sophisticated, as compared to the case where the channel is formed in a single-layer tube seat.

### ADVANTAGEOUS EFFECTS

The present invention provides a brake control device and a method of manufacturing a brake control device capable of densification and sophistication of the channels.

### BRIEF DESCRIPTION OF THE DRAWINGS

Fig. 1 is a perspective view showing a brake control device of a first embodiment.
Fig. 2 is a block diagram showing the brake control device of the first embodiment.
Fig. 3 is a perspective view showing a tube seat of the first embodiment.
Fig. 4 is a top view showing the tube seat of the first embodiment.
Fig. 5 is a side view showing the tube seat of the first embodiment.
Fig. 6 is a top view showing a first plate member forming the tube seat of the first embodiment.
Fig. 7 is a top view showing a second plate member forming the tube seat of the first embodiment.
Fig. 8 is a top view showing a third plate member forming the tube seat of the first embodiment.
Fig. 9 is a top view showing a fourth plate member forming the tube seat of the first embodiment.
Fig. 10 is a top view showing a fifth plate member forming the tube seat of the first embodiment.
Fig. 11 is a top view showing a sixth plate member forming the tube seat of the first embodiment.
Fig. 12 is a top view showing a seventh plate member forming the tube seat of the first embodiment.
Fig. 13 is a top view showing a sub plate forming the tube seat of the first embodiment.
Fig. 14 is a top view showing a first brazing sheet forming the tube seat of the first embodiment.
Fig. 15 is a top view showing a second brazing sheet forming the tube seat of the first embodiment.
Fig. 16 is a top view showing a third brazing sheet forming the tube seat of the first embodiment.
Fig. 17 is a top view showing a fourth brazing sheet forming the tube seat of the first embodiment.
Fig. 18 is a top view showing a brake control device of a second embodiment.
Fig. 19 is a view including the XIX-XIX section of Fig. 18.
Fig. 20 is a top view showing a dehumidification device of a third embodiment.
Fig. 21 is a side view from the direction of the arrow XXI of Fig. 20.
Fig. 22 is a sectional view of a sump provided in a tube seat of a variation of the embodiments.
Fig. 23 is a sectional view of a channel of another variation of the embodiments.

### DESCRIPTION OF THE EMBODIMENTS

Embodiments of the present invention will now be described with reference to the attached drawings. The following description of the embodiments will be based on an example of a brake control device that is a control device of a brake device for braking (air-braking) a railway vehicle (vehicle). In the following description, terms such as "parallel," "orthogonal," "center" and "coaxial" describe relative or absolute positions. These terms are not only strictly used but also allow some tolerances and relative differences in angle and distance as long as the same effects can be still produced. In the drawings used for the following description, members are shown to different scales into recognizable sizes.

### <First Embodiment>

### <Brake Control Device>

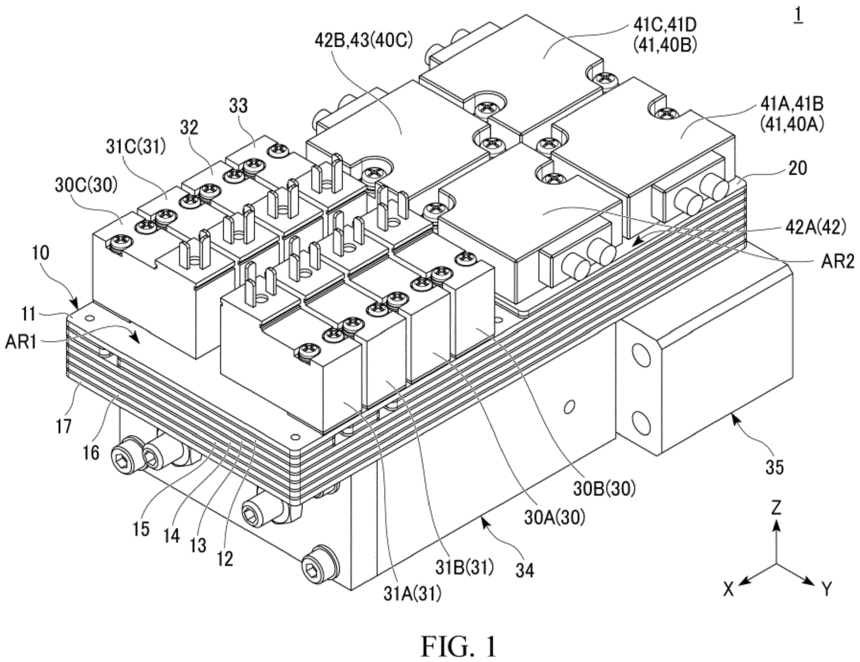

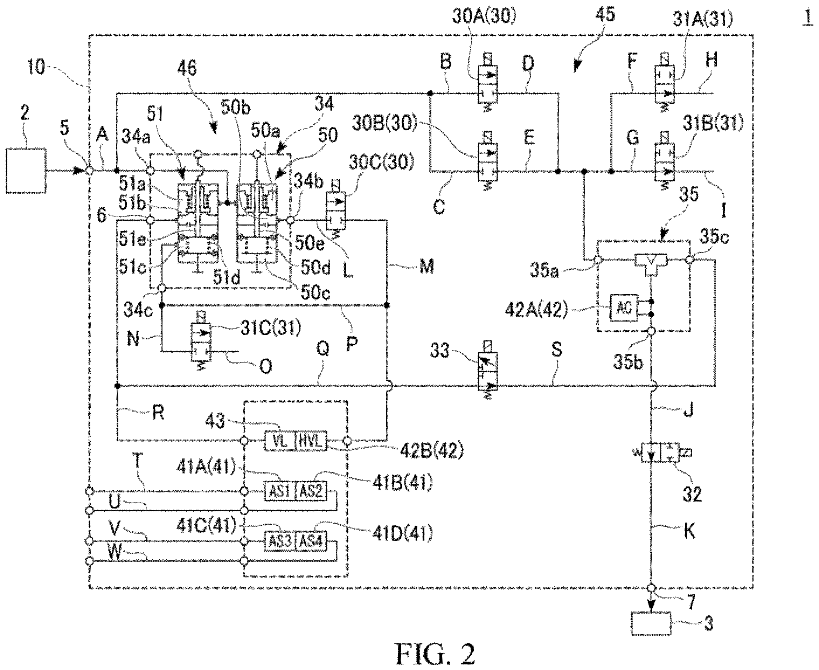

Fig. 1 is a perspective view showing a brake control device 1 of a first embodiment. Fig. 2 is a block diagram showing the brake control device 1 of the first embodiment. As shown in Fig. 1, the brake control device 1 includes a tube seat 10, regulating valves 30 to 35, and pressure sensors 41 to 43. In the drawings, different components of the regulating valves 30 to 35 and the pressure sensors 41 to 43 are denoted by a number with an appended sign (such as "A"). The appended sign is omitted when these components do not need to be distinguished.

In the following description, an XYZ orthogonal coordinate system is used as required. The X direction coincides with the front-rear direction of the vehicle. The Y direction coincides with the width direction of the vehicle. The Z direction is orthogonal to the X and Y directions and indicates the height direction of the vehicle (gravitational direction). The following description is made with the arrows shown in the drawings indicating the X, Y and Z directions, and the head side and the tail side of each arrow indicate the positive (+) side and the negative (-) side, respectively. The upper side and the lower side in the gravitational direction are respectively denoted as the +Z side and the -Z side.

The tube seat 10 is shaped like a rectangular parallelepiped which is long in the X direction and short in the Y direction. As shown in Fig. 2, the tube seat 10 includes: an input port 5 for receiving compressed air from a supply air tank 2 (an air source as an example of a fluid source) that is a source of compressed air (an example of a fluid); an air spring port 6 (an example of a fluid spring port) for receiving a pressure of an air spring (an example of a fluid spring) that receives the load of the vehicle; and an output port 7 for outputting a pressure.

The regulating valves 30 to 35 regulate the flow rate or the pressure of the compressed air input through the input port 5 (an example of a fluid input through an input port) to output working air (an example of a fluid for operating a brake device) for operating a brake cylinder 3 (an example of the brake device). A plurality of regulating valves 30 to 35 are provided. The plurality of regulating valves 30 to 35 include various valves such as feed valves 30, exhaust valves 31, an electromagnetic valve 32, an emergency valve 33, a variable load valve 34, and a double check valve 35.

As shown in Fig. 1, the feed valves 30, the exhaust valves 31, the electromagnetic valve 32, and the emergency valve 33 are provided on the +X side area within the upper surface of the tube seat 10. The feed valves 30, the exhaust valves 31, the electromagnetic valve 32, and the emergency valve 33 are provided on an area AR1 within the upper surface of a first plate member 11 forming the tube seat 10. The area AR1 does not overlap a sub plate 20. The feed valves 30, the exhaust valves 31, the electromagnetic valve 32, and the emergency valve 33 are fixed to the upper surface of the tube seat 10 (an example of a same side of the tube seat 10).

The feed valves 30A, 30B and the exhaust valves 31A, 31B are provided on the +Y side part within the area AR1. The feed valves 30A, 30B and the exhaust valves 31A, 31B are arranged in the order of the exhaust valve 31A, the exhaust valve 31B, the feed valve 30A, and the feed valve 30B from the +X end of the tube seat 10 toward the -X side.

The feed valve 30C, the exhaust valve 31C, the electromagnetic valve 32, and the emergency valve 33 are provided on the -Y side part within the area AR1. The feed valve 30C, the exhaust valve 31C, the electromagnetic valve 32, and the emergency valve 33 are arranged in this order from the +X end of the tube seat 10 toward the -X side. The feed valve 30C, the exhaust valve 31C, the electromagnetic valve 32, and the emergency valve 33 are positioned to overlap the exhaust valve 31A, the exhaust valve 31B, the feed valve 30A, and the feed valve 30B, respectively, as viewed from the Y direction.

The variable load valve 34 and the double check valve 35 are provided on the lower surface of the tube seat 10. The variable load valve 34 and the double check valve 35 are provided on the lower surface of a seventh plate member 17 forming the tube seat 10. The variable load valve 34 and the double check valve 35 are fixed to the lower surface of the tube seat 10 (an example of a same side of the tube seat 10).

The variable load valve 34 extends from the +X side area to the middle area in the X direction (including the area closer to the -X side) within the lower surface of the tube seat 10. The double check valve 35 is provided on the -X end side area within the lower surface of the tube seat 10. The double check valve 35 is provided on the -X side of the variable load valve 34. The aspect of arrangement (fixing positions) of the regulating valves 30 to 35 is not limited to the above arrangement but may be modified in accordance with required specifications.

A plurality of pressure sensors 41 to 43 are provided. The plurality of pressure sensors 41 to 43 include various pressure sensors such as air spring pressure sensors 41 (an example of fluid spring pressure sensors) for sensing the pressure of the air input through the air spring port (an example of a fluid input through the fluid spring port), pilot pressure sensors 42 for sensing a pilot pressure output from pilot pressure regulating valves, and the like.

The pressure sensors 41 to 43 are provided on an area AR2 on the -X side within the upper surface of the tube seat 10. The pressure sensors 41 to 43 are provided on the upper surface of the sub plate 20 forming the tube seat 10. The plurality of pressure sensors 41 to 43 are fixed to the upper surface of the tube seat 10 (an example of a same side of the tube seat 10). In other words, the regulating valves 30, 31 (an example of the pilot pressure regulating valves) and the air spring pressure sensors 41 , 43 (an example of the fluid spring pressure sensors) are fixed to the upper surface of the tube seat 10 (an example of a same side of the tube seat 10). The pilot pressure sensors 42 and the air spring pressure sensors 41, 43 are fixed to the upper surface of the tube seat 10 (an example of a same side of the tube seat 10). The regulating valves 30, 31 (an example of the pilot pressure regulating valves) and the pilot pressure sensors 42 are fixed to the upper surface of the tube seat 10 (an example of a same side of the tube seat 10).

The pilot pressure sensor 42A and the air spring pressure sensors 41A, 41B are provided on the +Y side part within the area AR2. The pilot pressure sensor 42A and the air spring pressure sensors 41A, 41B are arranged in this order from the +X end of the sub plate 20 toward the -X side. The pilot pressure sensor 42A is positioned to overlap the feed valve 30B as viewed from the X direction. The air spring pressure sensors 41A, 41B are integrated together as a sensor unit 40A. The sensor unit 40A is positioned to overlap the pilot pressure sensor 42A as viewed from the X direction.

The pilot pressure sensor 42B, the air spring pressure sensor 43, and the air spring pressure sensors 41C, 41D are provided on the -Y side part within the area AR2. The pilot pressure sensor 42B, the air spring pressure sensor 43, and the air spring pressure sensors 41C, 41D are arranged in this order from the +X end of the sub plate 20 toward the -X side. The air spring pressure sensors 41C, 41D are integrated together as a sensor unit 40B. The sensor unit 40B is positioned to overlap the sensor unit 40A as viewed from the Y direction. The pilot pressure sensor 42B and the air spring pressure sensor 43 are integrated together as a sensor unit 40C. The sensor unit 40C is positioned to overlap the pilot pressure sensor 42A as viewed from the Y direction. The sensor unit 40C is positioned to overlap the sensor unit 40B as viewed from the X direction. The aspect of arrangement (fixing positions) of the pressure sensors 41 to 43 is not limited to the above arrangement but may be modified in accordance with required specifications.

Based on the pressure of the air spring sensed by the air spring pressure sensors 41, the brake control device 1 controls the feed valves 30 and the exhaust valves 31 to generate a pilot pressure and outputs a brake pressure in accordance with the generated pilot pressure. As shown in Fig. 2, the brake control device 1 includes: a normal pilot pressure generating unit 45 for generating a pilot pressure in normal operation; and an emergency pilot pressure generating unit 46 for generating a pilot pressure in an emergency such as a power failure or a malfunction.

For example, in normal operation, the compressed air input through the input port 5 is passed through the normal pilot pressure generating unit 45, the double check valve 35, the electromagnetic valve 32, and the output port 7, regulated in flow rate or pressure by a relay valve (not shown), and directed to the brake cylinder 3. In normal operation, the emergency valve 33 is constantly powered and thus is constantly closed. Therefore, in normal operation, the normal pilot pressure is constantly output.

On the other hand, in an emergency, the emergency valve 33 is not powered and thus is opened. In an emergency, the compressed air input through the input port 5 is passed through the emergency pilot pressure generating unit 46, the emergency valve 33, the double check valve 35, the electromagnetic valve 32, and the output port 7, regulated in flow rate or pressure by a relay valve (not shown), and directed to the brake cylinder 3.

In the example shown in Fig. 2, the normal pilot pressure generating unit 45 includes the two feed valves 30A, 30B and the two exhaust valves 31A, 31B. This configuration makes it possible to reduce the capacity of each of the feed valves 30A, 30B and the exhaust valves 31A, 31B, thus downsizing the brake control device 1.

The normal pilot pressure generating unit 45 does not necessarily include the two feed valves 30A, 30B and the two exhaust valves 31A, 31B. For example, the normal pilot pressure generating unit 45 may include one each of feed valve 30 and exhaust valve 31 or include three or more each of feed valves 30 and exhaust valves 31. For example, the normal pilot pressure generating unit 45 may be formed of either the same number or different numbers of feed valves 30 and exhaust valves 31. For example, the configuration of the normal pilot pressure generating unit 45 can be modified in accordance with required specifications.

The emergency pilot pressure generating unit 46 includes the variable load valve 34, the feed valve 30C, the exhaust valve 31C, and the pilot pressure sensor 42B. The variable load valve 34 includes: a pressure regulating valve 50 (an example of the pilot pressure regulating valve) capable of outputting a pressure substantially corresponding to the load compensating pressure for a fully loaded vehicle; and an output valve 51 (an example of the pilot pressure regulating valve) that receives a pressure regulated by the feed valve 30C and the exhaust valve 31C. The load compensating pressure for a fully loaded vehicle refers to a pressure substantially corresponding to a pressure to be applied to the brake cylinder 3 to operate the emergency brake when the vehicle is fully loaded. Based on the pressure of the air spring that receives the load of the vehicle, the output valve 51 regulates the pressure of the compressed air input through the input port and outputs a pilot pressure.

The pressure regulating valve 50 includes an input chamber 50a having an input port, an output chamber 50b having an output port, and a pressure regulating chamber 50c having a pressure regulating port. The input chamber 50a receives the source pressure through the input port. The pressure regulating chamber 50c is provided with a full load securing spring 50d (an example of the air spring) for limitation to a pressure substantially corresponding to the load compensating pressure for a fully loaded vehicle.

The pressure regulating valve 50 includes a piston 50e movably supported on the main body of the pressure regulating valve 50. The piston 50e regulates the amount of opening of an opening formed in a partition between the input chamber 50a and the output chamber 50b, by the differential pressure between the pressing force of the full load securing spring 50d and the air pressure in the output chamber 50b. When the differential pressure between the pressing force of the full load securing spring 50d and the air pressure in the output chamber 50b is zero, the piston 50e closes the opening formed in the partition between the input chamber 50a and the output chamber 50b. When the opening formed in the partition between the input chamber 50a and the output chamber 50b is opened, the compressed air in the input chamber 50a flows into the output chamber 50b. The pressure in the output chamber 50b is regulated to a pressure substantially corresponding to the load compensating pressure for a fully loaded vehicle. The pressure regulated to the pressure substantially corresponding to the load compensating pressure for a fully loaded vehicle is output through the output port.

The output valve 51 uses the pressure regulated by the exhaust valve 31C as the pilot pressure to regulate the source pressure to the load compensating pressure in accordance with the current load of the vehicle carrying the passengers. The output valve 51 includes an input chamber 51a having an input port for receiving the source pressure, an output chamber 51b having an output port, and a pressure regulating chamber 51c having a pressure regulating port. The pressure regulating port receives the pressure regulated by the exhaust valve 31C as the pilot pressure. The pressure regulating chamber 51c is provided with an empty load securing spring 51d (an example of the air spring) for generating a load compensating pressure for an empty vehicle. The load compensating pressure for an empty vehicle refers to a pressure substantially corresponding to a pressure to be applied to the brake cylinder 3 to operate the emergency brake when the vehicle is empty.

Since the output valve 51 includes the empty load securing spring 51d, the empty load securing spring 51d secures at least a pressure substantially corresponding to the load compensating pressure for an empty vehicle if the pilot pressure is lost due to a malfunction or the like. In other words, if the pressure regulating valve 50 stops feeding the air, the opening between the input chamber 51a and the output chamber 51b can be opened by the elastic force (restoring force) of the empty load securing spring 51d, the interior of the output chamber 51b is maintained at a pressure substantially corresponding to the pressure generated by the elastic force of the empty load securing spring 51d.

The output valve 51 includes a piston 51e movably supported on the main body of the output valve 51. The piston 51e regulates the amount of opening of an opening formed in a partition between the input chamber 51a and the output chamber 51b, by the differential pressure between the total pressure of the pressure generated by the elastic force of the empty load securing spring 51d and the air pressure in the pressure regulating chamber 50c and the air pressure in the output chamber 51b. When the differential pressure between the total pressure of the pressure generated by the elastic force of the empty load securing spring 51d and the air pressure in the pressure regulating chamber 50c and the air pressure in the output chamber 51b is zero, the piston 51e closes the opening formed in the partition between the input chamber 51a and the output chamber 51b. When the opening formed in the partition between the input chamber 51a and the output chamber 51b is opened, the compressed air in the input chamber 51a flows into the output chamber 51b. The pressure in the output chamber 51b is regulated to the load compensating pressure.

In the example shown in Fig. 2, the emergency pilot pressure generating unit 46 includes one each of pressure regulating valve 50, output valve 51, feed valve 30C, exhaust valve 31C, and pilot pressure sensor 42B, but this configuration is not limitative. For example, the emergency pilot pressure generating unit 46 may include two or more each of pressure regulating valve 50, output valve 51, feed valve 30, exhaust valve 31, and pilot pressure sensor 42. For example, the emergency pilot pressure generating unit 46 may be formed of either the same number or different numbers of components. For example, the configuration of the emergency pilot pressure generating unit 46 can be modified in accordance with required specifications.

The above system including the normal pilot pressure generating unit 45 and the emergency pilot pressure generating unit 46 is a mere example and can be modified in accordance with required specifications. For example, it is also possible that the emergency pilot pressure generating unit 46 does not include the regulating valves 30C, 31C, and an average pressure of the air spring pressure sensors 41A to 41D is directly input to the variable load valve 34 to generate the emergency pilot pressure without electronic control. For example, it is also possible that the air spring pressure sensors 41A to 41D are fixed to a relay valve (not shown) instead of the tube seat 10.

### <Tube Seat>

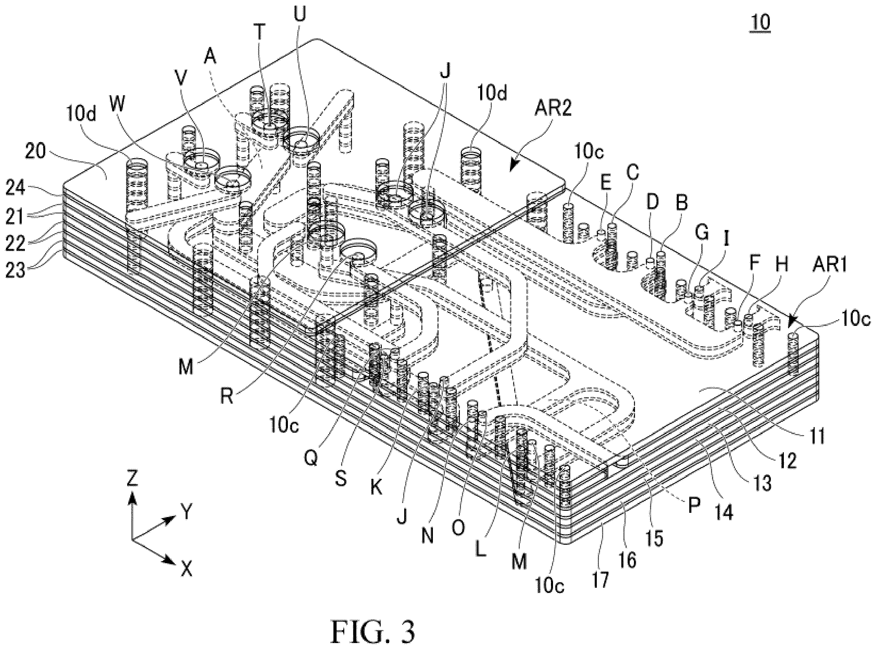

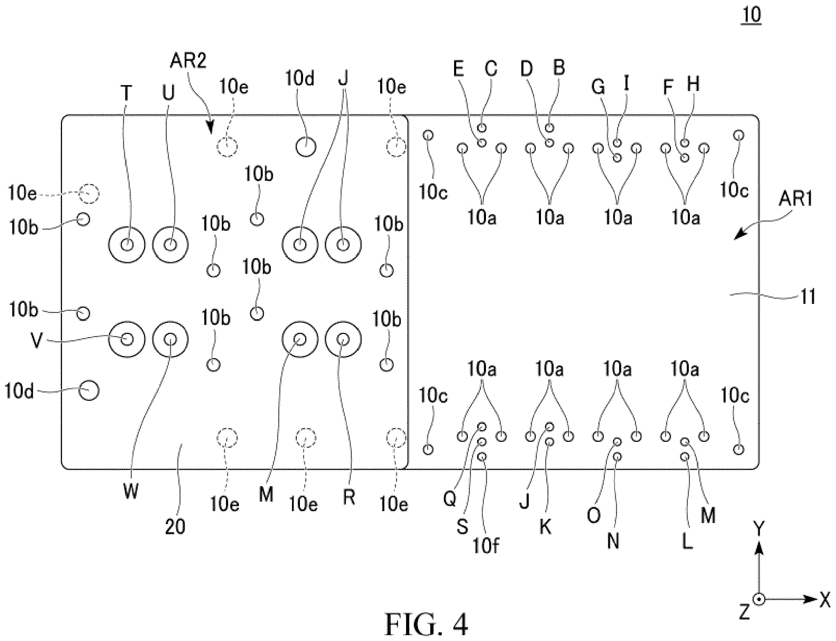

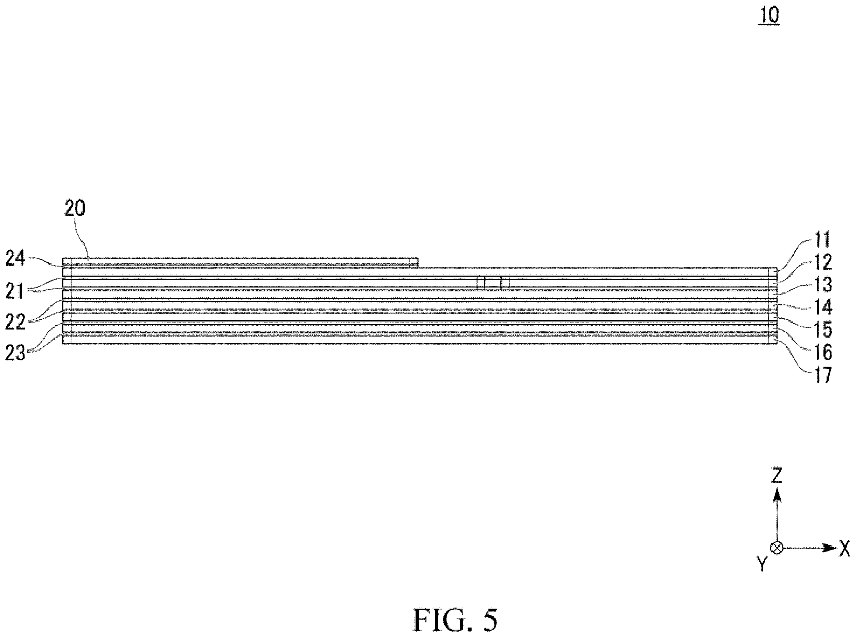

Fig. 3 is a perspective view showing the tube seat 10 of the first embodiment. Fig. 4 is a top view showing the tube seat 10 of the first embodiment. Fig. 5 is a side view showing the tube seat 10 of the first embodiment. As shown in Fig. 3, the tube seat 10 is formed of a plurality of plate-shaped members 11 to 17 and 20 to 24 laminated together in the Z direction. The plurality of plate-shaped members 11 to 17 and 20 to 24 forming the tube seat 10 are brazed together (an example of metal joining). Specifically, any two of the plurality of plate-shaped members 11 to 17 and 20 to 24 adjacent to each other in the lamination direction (the Z direction) are brazed together at respective surfaces facing each other.

The method of joining the plurality of plate-shaped members 11 to 17 and 20 to 24 is not limited to brazing but may be any of other interface joining methods or welding methods. Examples of other interface joining methods include liquid phase bonding such as liquid phase diffusion bonding and solid phase bonding such as solid phase diffusion bonding, sinter bonding, and ultrasonic bonding. Examples of welding methods include arc welding, high energy beam welding, and resistance welding. For example, the joining method of the plurality of plate-shaped members 11 to 17 and 20 to 24 can be changed in accordance with required specifications.

The channels A to W (see Fig. 2) connecting between the input port 5 of the tube seat 10 and the regulating valves 30 to 35 are formed by the plurality of plate-shaped members 11 to 17 and 20 to 24. The channels A to W formed by the plurality of plate-shaped members 11 to 17 and 20 to 24 are as follows. The channel between the input port 5 of the tube seat 10 and the port 34a of the variable load valve 34 is a "channel A," the channels between a halfway point of the channel A and the normal pilot pressure generating unit 45 are "channels B to C," the channels between the normal pilot pressure generating unit 45 and the double check valve 35 (specifically, the input port 35a, which is one of the input ports of the double check valve 35) are "channels D to G," the channel connected to one of the exhaust ports of the normal pilot pressure generating unit 45 (specifically, the output port of the exhaust valve 31A) is a "channel H," the channel connected to the other of the exhaust ports of the normal pilot pressure generating unit 45 (specifically, the output port of the exhaust valve 31B) is a "channel I," the channel connecting between the output port 35b of the double check valve 35 and the input port of the electromagnetic valve 32 is a "channel J," the channel between the output port of the electromagnetic valve 32 and the output port 7 of the tube seat 10 is a "channel K," the channel connecting between the port 34b of the variable load valve 34 (specifically, the port leading to the output port of the pressure regulating valve 50) and the input port of the feed valve 30C is a "channel L," the channel between the output port of the feed valve 30C and the pilot pressure sensor 42B is a "channel M," the channel connecting between the port 34c of the variable load valve 34 (specifically, the port leading to the pressure regulating port of the output valve 51) and the input port of the exhaust valve 31C is a "channel N," the channel connected to the exhaust port of the emergency pilot pressure generating unit 46 (specifically, the output port of the exhaust valve 31C) is a "channel O," the channel connecting between a halfway point of the channel M and a halfway point of the channel N is a "channel P," the channel connecting between the port of the variable load valve 34 (in other words, the port leading to the air spring port 6) and the input port of the emergency valve 33 is a "channel Q," the channel between a halfway point of the channel Q and the air spring pressure sensor 43 is a "channel R," the channel between the output port of the emergency valve 33 and the double check valve 35 (specifically, the input port 35c, which is the other of the input ports of the double check valve 35) is a "channel S," the channel connected to the air spring pressure sensor 41A is a "channel T," the channel connected to the air spring pressure sensor 41B is a "channel U," the channel connected to the air spring pressure sensor 41C is a "channel V," and the channel connected to the air spring pressure sensor 41D is a "channel W."

As shown in Fig. 2, the compressed air flowing through the input port 5 of the tube seat 10 into the channel A passes through the port 34a of the variable load valve 34 and the channel in the variable load valve 34 and flows into the input chamber 50a of the pressure regulating valve 50 and the input chamber 51a of the output valve 51.

Of the channels B to C, the channel B connects between a halfway point of the channel A and the input port of the feed valve 30A. The channel C connects between a halfway point of the channel B and the input port of the feed valve 30B. The compressed air flowing through the channel A into the channel B passes through the input port of the feed valve 30A and flows into the feed valve 30A. The compressed air flowing through the channel B into the channel C passes through the input port of the feed valve 30B and flows into the feed valve 30B.

Of the channels D to G, the channel D connects between the output port of the feed valve 30A and the input port of the double check valve 35. The channel E connects between the output port of the feed valve 30B and a halfway point of the channel D. The channel F connects between a halfway point of the channel D and the input port of the exhaust valve 31A. The channel G connects between a halfway point of the channel F and the input port of the exhaust valve 31B. The compressed air flowing through the channels B, C into the feed valves 30A, 30B, respectively, passes through the channels D to G, H, and I and is regulated in flow rate or pressure by the normal pilot pressure generating unit 45 (the feed valves 30 and the exhaust valves 31). The compressed air regulated in flow rate or pressure by the normal pilot pressure generating unit 45 passes through the input port 35a, which is one of the input ports of the double check valve 35, and flows into the double check valve 35.

The compressed air flowing into the double check valve 35 passes through the output port 35b of the double check valve 35, the channel J, and the input port of the electromagnetic valve 32 and flows into the electromagnetic valve 32. The compressed air flowing into the electromagnetic valve 32 is passed through the output port of the electromagnetic valve 32, the channel K, and the output port 7 of the tube seat 10, regulated in flow rate or pressure by a relay valve (not shown), and directed to the brake cylinder 3.

On the other hand, the compressed air flowing into the input chamber 50a of the pressure regulating valve 50 and the input chamber 51a of the output valve 51 passes through the channels L, M, N, O, and P and is regulated in flow rate or pressure by the emergency pilot pressure generating unit 46 (the variable load valve 34, the feed valve 30C, the exhaust valve 31C, and the pilot pressure sensor 42B). The compressed air regulated in flow rate or pressure by the emergency pilot pressure generating unit 46 passes through the port of the variable load valve 34 (in other words, the port leading to the air spring port 6), the channel Q, and the input port of the emergency valve 33 and flows into the emergency valve 33.

As described above, the emergency valve 33 is opened in an emergency, and thus the compressed air flowing into the emergency valve 33 passes through the output port of the emergency valve 33, the channel S, and the input port 35c, which is the other of the input ports of the double check valve 35, and flows into the double check valve 35.

The compressed air flowing into the double check valve 35 passes through the output port 35b of the double check valve 35, the channel J, and the input port of the electromagnetic valve 32 and flows into the electromagnetic valve 32. The compressed air flowing into the electromagnetic valve 32 is passed through the output port of the electromagnetic valve 32, the channel K, and the output port 7 of the tube seat 10, regulated in flow rate or pressure by a relay valve (not shown), and directed to the brake cylinder 3.

As shown in Fig. 3, the tube seat 10 includes the channels A to W described above and openings 10a to 10e located at different positions than the channels A to W. As shown in Fig. 4, the portions of the channels A to W open toward the +Z side (specifically, the +Z side ends of the channels B to O and Q to W) and the openings 10a to 10e are formed to have a circular shape in top view.

The plurality of openings 10a to 10d include various openings such as: valve mounting openings 10a for mounting the regulating valves 30 to 33 (for example, female screw portions threadably engaged with bolts, which are an example of valve fasteners); sensor mounting openings 10b for mounting the pressure sensors 41 to 43 (for example, female screw portions threadably engaged with bolts, which are an example of sensor fasteners); openings 10c to 10e for positioning and mounting the tube seat 10; and an exhaust opening 10f leading to the exhaust port of the emergency valve 33 (see Fig. 2). The aspect of the openings is not limited to the above but may be modified in accordance with required specifications.

The openings (the +Z side ends) of the channels B to O, Q, and S positioned in the area AR1 of the tube seat 10 are located in respective areas overlapping the associated regulating valves 30 to 33 (see Fig. 1) in top view. The openings of the channels B to H are positioned near the +Y end of the area AR1 in top view. The openings of the channels B, D are positioned in the area overlapping the associated feed valve 30A (see Fig. 1) in top view and are spaced apart from each other in the Y direction. The opening of the channel B leads to the input port of the feed valve 30A (see Fig. 2). The opening of the channel D leads to the output port of the feed valve 30A (see Fig. 2).

The openings of the channels C, E are positioned in the area overlapping the associated feed valve 30B (see Fig. 1) in top view and are spaced apart from each other in the Y direction. The opening of the channel C leads to the input port of the feed valve 30B (see Fig. 2). The opening of the channel E leads to the output port of the feed valve 30B (see Fig. 2).

The openings of the channels F, H are positioned in the area overlapping the associated exhaust valve 31A (see Fig. 1) in top view and are spaced apart from each other in the Y direction. The opening of the channel F leads to the input port of the exhaust valve 31A (see Fig. 2). The opening of the channel H leads to the output port of the exhaust valve 31A (see Fig. 2).

The openings of the channels G, I are positioned in the area overlapping the associated exhaust valve 31B (see Fig. 1) in top view and are spaced apart from each other in the Y direction. The opening of the channel G leads to the input port of the exhaust valve 31B (see Fig. 2). The opening of the channel I leads to the output port of the exhaust valve 31B (see Fig. 2).

The openings of the channels J to O, Q, and S are positioned near the -Y end of the area AR1 in top view. The openings of the channels J, K are positioned in the region overlapping the associated electromagnetic valve 32 (see Fig. 1) in top view and are spaced apart from each other in the Y direction. One of the openings of the channel J (the opening on the +X side) leads to the input port of the electromagnetic valve 32 (see Fig. 2). The opening of the channel K leads to the output port of the electromagnetic valve 32 (see Fig. 2).

The openings of the channels L, M are positioned in the region overlapping the associated feed valve 30C (see Fig. 1) in top view and are spaced apart from each other in the Y direction. The opening of the channel L leads to the input port of the feed valve 30C (see Fig. 2). One of the openings of the channel M (the opening on the +X side) leads to the output port of the feed valve 30C (see Fig. 2).

The openings of the channels N, O are positioned in the region overlapping the associated exhaust valve 31C (see Fig. 1) in top view and are spaced apart from each other in the Y direction. The opening of the channel N leads to the input port of the exhaust valve 31C (see Fig. 2). The opening of the channel O leads to the output port of the exhaust valve 31C (see Fig. 2).

The openings of the channels Q, S are positioned in the region overlapping the associated emergency valve 33 (see Fig. 1) in top view and are spaced apart from each other in the Y direction. The opening of the channel Q leads to the input port of the emergency valve 33 (see Fig. 2). The opening of the channel S leads to the output port of the emergency valve 33 (see Fig. 2).

Two valve mounting openings 10a are provided for each of the associated regulating valves 30 to 33 (see Fig. 1). The two valve mounting openings 10a are spaced apart from each other in the X direction so as to be positioned on opposite sides of the openings of the channels B to O, Q, and S located in the regions overlapping the associated regulating valves 30 to 33 in top view.

A plurality (for example, four in the embodiment) of openings 10c are provided. The four openings 10c are positioned one at each of the four corners of the area AR1 that has a rectangular shape in top view.

The exhaust opening 10f is positioned near the -Y end of the area AR1 in top view. The exhaust opening 10f is spaced apart from the opening of the channel S in the Y direction.

The openings (the +Z side ends) of the channels J, M, R, and T to W positioned in the area AR2 of the tube seat 10 are located in respective areas overlapping the associated pressure sensors 41 to 43 (see Fig. 1) in top view. The openings of the channels J, M, R, and T to W positioned in the area AR2 are located in the middle in the Y direction in top view (specifically, between the openings of the channels B to H and the opening of the channels J to O, Q, and S in the Y direction).

The openings of the channel J (the two openings of the channel J in the example shown) positioned in the area AR2 are located in the area overlapping the associated pilot pressure sensor 42A (see Fig. 1) in top view and are spaced apart from each other in the X direction. The openings of the channels M, R positioned in the area AR2 are located in the area overlapping in top view the sensor unit 40C (see Fig. 1) including the pilot pressure sensor 42B and the air spring pressure sensor 43 associated therewith, and the openings of the channels M, R are spaced apart from each other in the X direction. The openings of the channels T, U positioned in the area AR2 are located in the area overlapping in top view the sensor unit 40A (see Fig. 1) including the air spring pressure sensors 41A, 41B associated therewith, and the openings of the channels T, U are spaced apart from each other in the X direction. The openings of the channels V, W positioned in the area AR2 are located in the area overlapping in top view the sensor unit 40B (see Fig. 1) including the air spring pressure sensors 41C, 41D associated therewith, and the openings of the channels V, W are spaced apart from each other in the X direction.

Two sensor mounting openings 10b are provided for each of the pilot pressure sensor 42A and the sensor units 40A to 40C (see Fig. 1) associated therewith. The two sensor mounting openings 10b are spaced apart from each other in both the X direction and the Y direction so as to be positioned on opposite sides of the openings of the channels J, M, R, and T to W located in the regions overlapping in top view the pilot pressure sensor 42A and the sensor units 40A to 40C associated therewith.

A plurality (for example, two in the embodiment) of openings 10d are provided. One of the openings 10d is positioned on the +X side and near the +Y end of the area AR2 in top view. The other of the openings 10d is positioned on the -Y side and near the -X end of the area AR2 in top view.

A plurality (for example, six in the embodiment) of openings 10e are provided. Two of the plurality of openings 10e are positioned near the +Y end of the tube seat 10 in top view and are spaced apart from each other in the X direction so as to be positioned on opposite sides of one of the openings 10d. Three of the plurality of openings 10e are positioned near the -Y end of the tube seat 10 in top view and are spaced apart from each other in the X direction. One of the openings 10d is positioned on the +Y side and near the -X end of the tube seat 10 in top view.

As shown in Fig. 5, the tube seat 10 includes a plurality (for example, seven in the embodiment) of plate members 11 to 17, a sub plate 20 (an example of the outermost plate-shaped member of the plurality of plate-shaped members), and a plurality (for example, four in the embodiment) of brazing sheets 21 to 24. The plurality of plate members 11 to 17 include a first plate member 11 (an example of the outermost plate-shaped member of the plurality of plate-shaped members), a second plate member 12, a third plate member 13, a fourth plate member 14, a fifth plate member 15, a sixth plate member 16, and a seventh plate member 17 (an example of the outermost plate-shaped member of the plurality of plate-shaped members). The plurality of brazing sheets 21 to 24 include two first brazing sheets 21, two second brazing sheets 22, two third brazing sheets 23, and a fourth brazing sheet 24.

The tube seat 10 is formed of the plate members 17 and the brazing sheets 21 to 24 stacked alternately. The sub plate 20 is provided on the top of the tube seat 10. The portion of the tube seat 10 except the sub plate 20 and the fourth brazing sheet 24 includes the following that are laminated in the downward direction: the first plate member 11, one of the first brazing sheets 21, the second plate member 12, the other of the first brazing sheets 21, the third plate member 13, one of the second brazing sheets 22, the fourth plate member 14, the other of the second brazing sheets 22, the fifth plate member 15, one of the third brazing sheets 23, the sixth plate member 16, the other of the third brazing sheets 23, and the seventh plate member 17. The sub plate 20 is provided on the upper surface of the first plate member 11 via the fourth brazing sheet 24.

For example, the plate members 11 to 17 and the sub plate 20 are formed of a metal such as an aluminum alloy. The substance of the plate members 11 to 17 and the sub plate 20 is not limited to the above but may be modified in accordance with required specifications.

For example, the brazing sheets 21 to 24 are formed of a core material and a brazing material having a lower melting point than the core material. For example, the brazing sheets 21 to 24 are formed of an aluminum alloy clad with an Al-Si alloy, or what is called aluminum brazing sheets. The substance of the brazing sheets 21 to 24 is not limited to the above but may be modified in accordance with required specifications.

For example, the brazing sheets 21 to 24 are what is called double-sided clads formed of a core material and a brazing material provided on both sides of the core material. The aspect of the brazing sheets 21 to 24 is not limited to the above. For example, the brazing sheets 21 to 24 may be what is called single-sided clads formed of a core material and a brazing material provided on only one side of the core material. For example, the aspect of the brazing sheets 21 to 24 can be modified in accordance with required specifications.

For example, each of the plate members 11 to 17 has the same thickness. For example, each of the plate members 11 to 17 has a thickness from 1.8 mm to 2.2 mm. For example, the sub plate 20 has a smaller thickness than the plate members 11 to 17. For example, the sub plate 20 has a thickness from 1.3 mm to 1.7 mm. For example, each of the brazing sheets 21 to 24 has the same thickness. For example, each of the brazing sheets 21 to 24 has a smaller thickness than the sub plate 20. For example, each of the brazing sheets 21 to 24 has a thickness from 0.6 mm to 1.0 mm. The thicknesses of the components of the tube seat 10 (the plate members 11 to 17, the sub plate 20, and the brazing sheets 21 to 24) are not limited to the above but may be modified in accordance with required specifications.

### <First Plate Member>

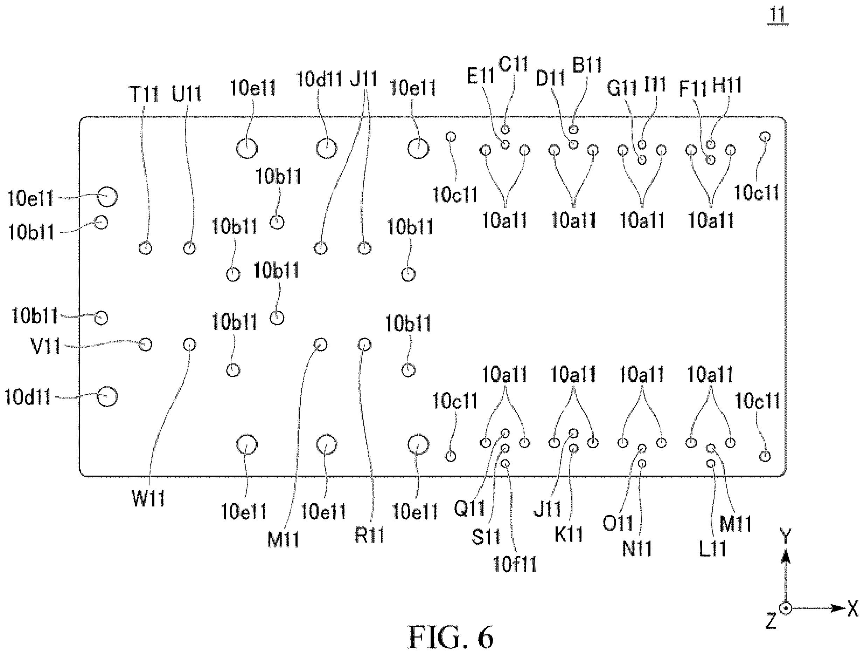

Fig. 6 is a top view showing the first plate member 11 forming the tube seat 10 of the first embodiment. As shown in Fig. 6, the first plate member 11 is shaped like a rectangular plate which is long in the X direction and short in the Y direction. The first plate member 11 has openings B11 to O11 and Q11 to W11 and openings 10a11 to 10f 11 associated with the channels B to O and Q to W and the openings 10a to 10f (see Fig. 4) described above. The openings of the first plate member 11 that form a part of the channels or the openings of the tube seat 10 described above are denoted by reference signs ending with "11."

The openings B11 to O11 and Q11 to W11 and the openings 10a11 to 10f11 are open in the thickness direction of the first plate member 11. The openings B11 to O11 and Q11 to W11 and the openings 10a11 to 10f 11 have a circular shape in top view.

### <Second Plate Member>

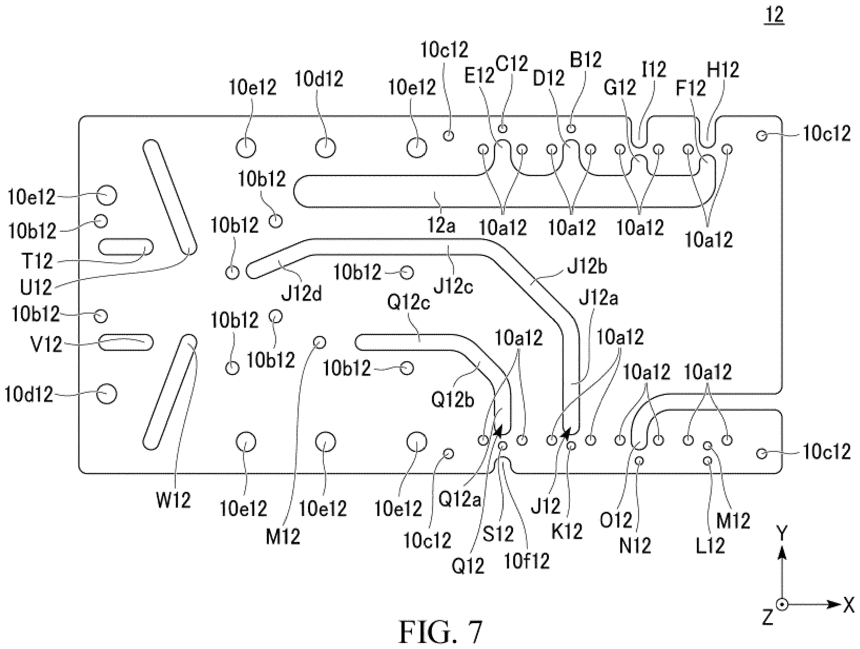

Fig. 7 is a top view showing the second plate member 12 forming the tube seat 10 of the first embodiment. As shown in Fig. 7, the second plate member 12 is shaped like a rectangular plate which is long in the X direction and short in the Y direction. The second plate member 12 has openings B12 to 012 and Q12 to W12 and openings 10a12 to 10f12 associated with the channels B to O and Q to W and the openings 10a to 10f (see Fig. 4) described above. The openings of the second plate member 12 that form a part of the channels or the openings of the tube seat 10 described above (in other words, the portions connected to the openings of the first plate member 11) are denoted by reference signs ending with "12."

The openings B12, C12, K12, L12, M12, S12, and 10a12 to 10e12 of the second plate member 12 have a circular shape and overlap in top view the openings B11, C11, K11, L11, M11, S11, and 10a11 to 10e11 of the first plate member 11 (see Fig. 6), respectively.

The second plate member 12 has an opening 12a including the openings D12 to G12. The opening 12a extends from the opening F12 side toward the -X side (specifically, to the position between the opening 10d12 near the +Y end and the opening 10e12 in the X direction) in top view.

The opening H12 is positioned on the extension of the opening F12, which is included in the opening 12a and extends in the Y direction in top view. The opening H12 is a recess formed from the +Y end surface of the second plate member 12 toward the -Y side.

The opening I12 is positioned on the extension of the opening G12, which is included in the opening 12a and extends in the Y direction in top view. The opening 112 is a recess formed toward the -Y side from the portion of the +Y end surface of the second plate member 12 positioned on the -X side relative to the opening H12.

The opening J12 is positioned on the -Y side relative to the opening 12a. In top view, the opening J12 includes an opening J12a extending from the position overlapping the opening J11 (see Fig. 6) toward the +Y side, an opening J12b extending obliquely from the +Y end of the opening J12a so as to be closer to the +Y side toward the -X side, an opening J12c extending from the -X end of the opening J12b toward the -X side, and an opening J12d extending obliquely from the -X end of the opening J12c so as to be closer to the -Y side toward the -X side.

The opening 012 is positioned on the +X side relative to the opening J12. In top view, the opening 012 extends from the position overlapping the opening O11 (see Fig. 6) toward the +Y side and bends in an arc-like shape toward the +X side, and then the opening 012 extends toward the +X end of the second plate member 12. The +X end of the opening 012 is open in the -Y side portion of the +X end surface of the second plate member 12.

The opening Q12 is provided in the -Y side portion of the second plate member 12. The opening Q12 is positioned on the opposite side of the opening J12 to the opening 012 in the X direction. In top view, the opening Q12 includes an opening Q12a extending from the position overlapping the opening Q11 (see Fig. 6) of the first plate member 11 toward the +Y side, an opening Q12b extending obliquely from the +Y end of the opening Q12a so as to be closer to the +Y side toward the -X side, and an opening Q12c extending from the -X end of the opening Q12b toward the -X side to the position overlapping the opening R11 (see Fig. 6) of the first plate member 11.

In top view, the opening 10f12 is positioned on the extension of the opening Q12a and on the -Y side relative to the opening S12. The opening 10f12 is a recess formed from the -Y end surface of the second plate member 12 toward the +Y side.

The opening T12 is positioned in the +Y side portion of the -X end of the second plate member 12. In top view, the opening T12 extends from the position overlapping the opening T11 (see Fig. 6) of the first plate member 11 toward the - X side.

In top view, the opening U12 has a straight shape longer than the opening T12. In top view, the opening U12 extends obliquely from the position overlapping the opening U11 (see Fig. 6) of the first plate member 11 so as to be closer to the -X side toward the +Y side.

The opening V12 is provided in the -Y side portion of the -X end of the second plate member 12. In top view, the opening V12 extends from the position overlapping the opening V11 (see Fig. 6) of the first plate member 11 toward the - X side.

In top view, the opening W12 has a straight shape longer than the opening V12. In top view, the opening W12 extends obliquely from the position overlapping the opening W11 (see Fig. 6) of the first plate member 11 so as to be closer to the -X side toward the -Y side.

### <Third Plate Member>

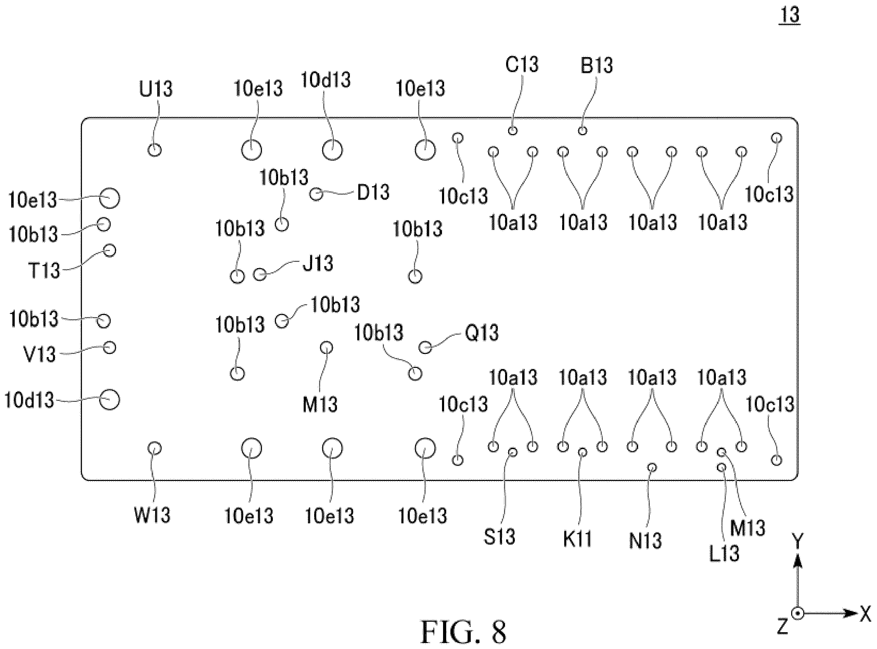

Fig. 8 is a top view showing the third plate member 13 forming the tube seat 10 of the first embodiment. As shown in Fig. 8, the third plate member 13 is shaped like a rectangular plate which is long in the X direction and short in the Y direction. The third plate member 13 has openings B13 to D13, J13 to N13, Q13, and S13 to W13 and openings 10a13 to 10e13 associated with the channels B to D, J to N, Q, and S to W and the openings 10a to 10e (see Fig. 4) described above. The openings of the third plate member 13 that form a part of the channels or the openings of the tube seat 10 described above (in other words, the portions connected to the openings of the second plate member 12) are denoted by reference signs ending with "13."

The openings B13, C13, K13 to N13, and S13 and the openings 10a13 to 10e13 of the third plate member 13 have a circular shape and overlap in top view the openings B12, C12, K12 to N12, and S12 and the openings 10a12 to 10e12 of the second plate member 12 (see Fig. 7), respectively.

The opening D13 of the third plate member 13 has a circular shape and is positioned to overlap the -X end of the opening 12a of the second plate member 12 (see Fig. 7) in top view. The opening J13 of the third plate member 13 has a circular shape and is positioned to overlap the -X end of the opening J12d of the second plate member 12 (see Fig. 7) in top view. The opening Q13 of the third plate member 13 has a circular shape and is positioned to overlap a halfway point of the opening Q12c of the second plate member 12 (see Fig. 7) in top view. The opening T13 of the third plate member 13 has a circular shape and is positioned to overlap the -X end of the opening T12 of the second plate member 12 (see Fig. 7) in top view. The opening U13 of the third plate member 13 has a circular shape and is positioned to overlap the +Y end of the opening U12 of the second plate member 12 (see Fig. 7) in top view. The opening V13 of the third plate member 13 has a circular shape and is positioned to overlap the -X end of the opening V12 of the second plate member 12 (see Fig. 7) in top view. The opening W13 of the third plate member 13 has a circular shape and is positioned to overlap the -Y end of the opening W12 of the second plate member 12 (see Fig. 7) in top view.

### <Fourth Plate Member>

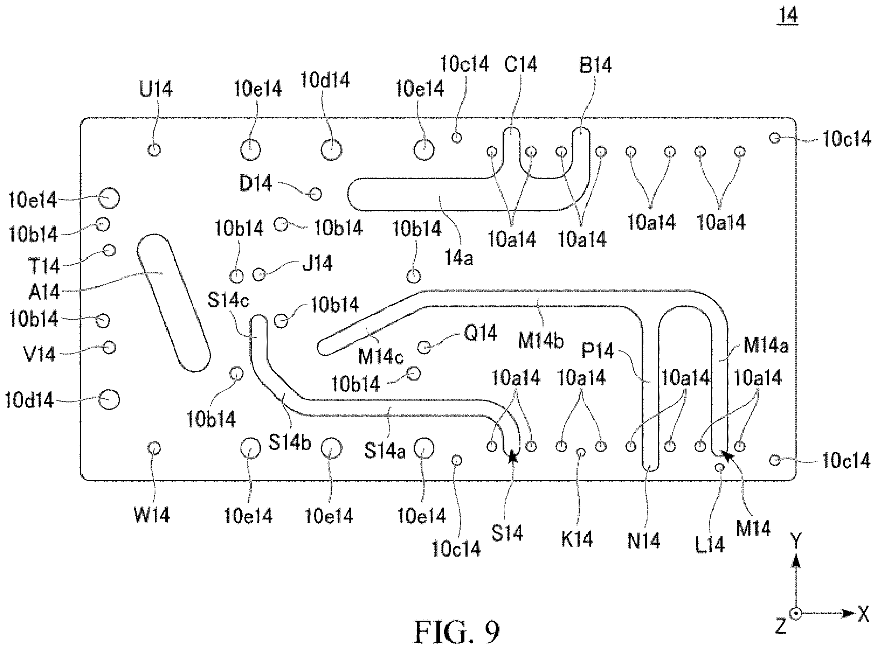

Fig. 9 is a top view showing the fourth plate member 14 forming the tube seat 10 of the first embodiment. As shown in Fig. 9, the fourth plate member 14 is shaped like a rectangular plate which is long in the X direction and short in the Y direction. The fourth plate member 14 has openings A14, B14 to D14, J14 to N14, P14, Q14, and S14 to W14 and openings 10a14 to 10e14 associated with the channels A to D, J to N, P, Q, and S to W and the openings 10a to 10e (see Fig. 4) described above. The openings of the fourth plate member 14 that form a part of the channels or the openings of the tube seat 10 described above (in other words, the portions connected to the openings of the third plate member 13 and the fifth plate member 15) are denoted by reference signs ending with "14."

The openings D14, J14 to L14, Q14, and T14 to W14 and the openings 10a14 to 10e14 of the fourth plate member 14 have a circular shape and overlap in top view the openings D13, J13 to L13, Q13, and T13 to W13 and the openings 10a13 to 10e13 of the third plate member 13 (see Fig. 8), respectively.

The opening A14 is provided in the -X side portion of the fourth plate member 14. In top view, the opening A14 extends obliquely from the point of intersection of the line passing through the center of the opening T14 and extending along the X direction with the line passing through the center of the opening U14 and extending along the Y direction, so as to be closer to the +X side toward the -Y side.

The fourth plate member 14 has an opening 14a including the openings B14 and C14. The opening 14a extends from the opening B14 side toward the -X side (specifically, to the position near the +X side of the opening D14) in top view.

The opening M14 is positioned on the -Y side relative to the opening 14a in top view. In top view, the opening M14 includes an opening M14a extending from the position overlapping one of the openings M13 of the third plate member 13 (the opening M13 on the +X side; see Fig. 8) toward the +Y side, an opening M14b bending in an arc-like shape from the +Y end of the opening M14a toward the -X side and then extending toward the -X side, and an opening M14c extending obliquely from the -X end of the opening M14b so as to be closer to the -Y side toward the -X side.

The opening N14 of the fourth plate member 14 is positioned to overlap the opening N13 of the third plate member 13 (see Fig. 8) in top view. The opening P14 extends from the opening N14 toward the +Y side and is connected to a halfway point of the opening M14b in top view.

The opening S14 is provided in the -Y side portion of the fourth plate member 14. In top view, the opening S14 includes an opening S14a extending from the position overlapping the opening S13 (see Fig. 8) of the third plate member 13 toward the +Y side, bending toward the -X side, and then extending toward the -X side, an opening S14b extending obliquely from the -X end of the opening S14a so as to be closer to the +Y side toward the -X side, and an opening S14c extending from the +Y end of the opening S14b toward the +Y side.

### <Fifth Plate Member>

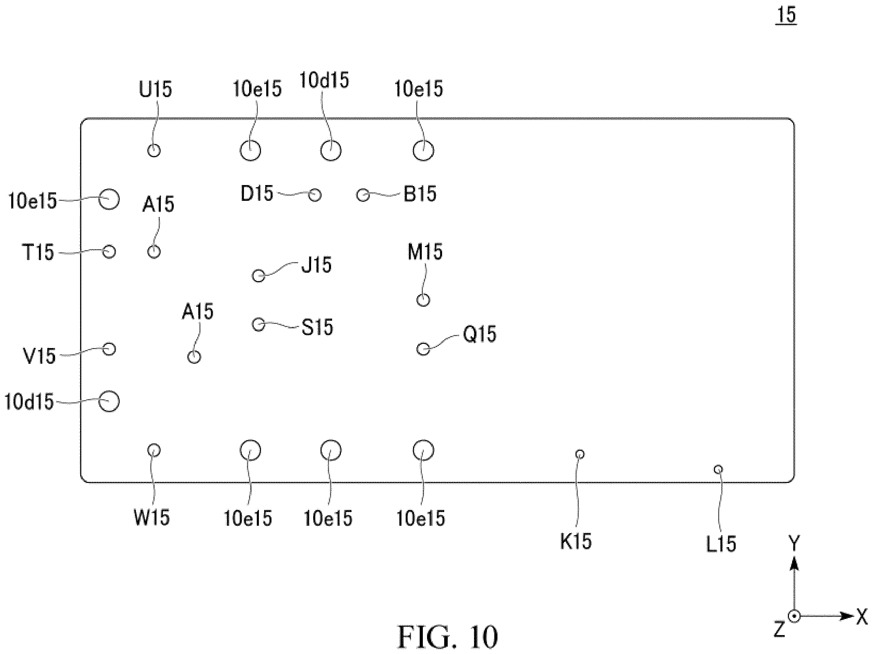

Fig. 10 is a top view showing the fifth plate member 15 forming the tube seat 10 of the first embodiment. As shown in Fig. 10, the fifth plate member 15 is shaped like a rectangular plate which is long in the X direction and short in the Y direction. The fifth plate member 15 has openings A15, B15, D15, J15 to M15, Q15, and S15 to W15 and openings 10d15 and 10e15 associated with the channels A, B, D, J to M, Q, and S to W and the openings 10d and 10e (see Fig. 4) described above. The openings of the fifth plate member 15 that form a part of the channels or the openings of the tube seat 10 described above (in other words, the portions connected to the openings of the fourth plate member 14) are denoted by reference signs ending with "15."

The openings D15, J15 to L15, Q15, and T15 to W15 and the openings 10d15 and 10e15 of the fifth plate member 15 have a circular shape and overlap in top view the openings D14, J14 to L14, Q14, and T14 to W14 and the openings 10d14 and 10e14 of the fourth plate member 14 (see Fig. 9), respectively.

One of the openings A15 of the fifth plate member 15 (the opening A15 on the -X side) has a circular shape and is located at the position overlapping the +Y end of the opening A14 of the fourth plate member 14 (see Fig. 9) in top view (specifically, the point of intersection of the line passing through the center of the opening T15 and extending along the X direction with the line passing through the center of the opening U15 and extending along the Y direction). The other of the openings A15 of the fifth plate member 15 (the opening A15 on the +X side relative to the one of the openings A15) has a circular shape and is positioned to overlap the -Y end of the opening A14 of the fourth plate member 14 (see Fig. 9) in top view.

The opening B15 of the fifth plate member 15 has a circular shape and is positioned to overlap the -X end of the opening 14a of the fourth plate member 14 in top view. The opening M15 of the fifth plate member 15 has a circular shape and is positioned to overlap the -X end of the opening M14b of the fourth plate member 14 (in other words, the +X end of the opening M14c; see Fig. 9) in top view. The opening S15 of the fifth plate member 15 has a circular shape and is positioned to overlap the +Y end of the opening S14c of the fourth plate member 14 (see Fig. 9) in top view.

### <Sixth Plate Member>

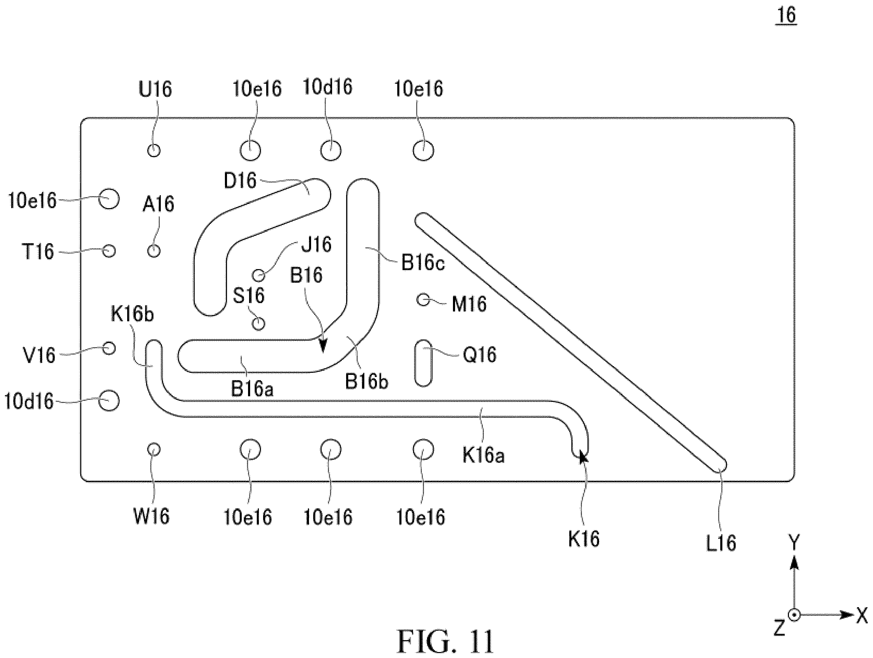

Fig. 11 is a top view showing the sixth plate member 16 forming the tube seat 10 of the first embodiment. As shown in Fig. 11, the sixth plate member 16 is shaped like a rectangular plate which is long in the X direction and short in the Y direction. The sixth plate member 16 has openings A16, B16, D16, J16 to M16, Q16, and S16 to W16 and openings 10d16 and 10e16 associated with the channels A, B, D, J to M, Q, and S to W and the openings 10d and 10e (see Fig. 4) described above. The openings of the sixth plate member 16 that form a part of the channels or the openings of the tube seat 10 described above (in other words, the portions connected to the openings of the fifth plate member 15) are denoted by reference signs ending with "16."

The openings A16, J16, M16, and S16 to W16 and the openings 10d16 and 10e16 of the sixth plate member 16 have a circular shape and overlap in top view one of the openings A15 (the opening A15 on the -X side), the openings J15, M15, and S15 to W15, and the openings 10d15 and 10e15 of the fifth plate member 15 (see Fig. 10), respectively.

The opening B16 is provided in the -X side portion of the sixth plate member 16. In top view, the opening B16 includes an opening B16a extending from the position overlapping the other of the openings A15 of the fifth plate member 15 (the opening A15 on the +X side relative to the one of the openings A15) toward the +X side, an opening B16b extending obliquely from the +X end of the opening B 16a so as to be closer to the +Y side toward the +X side, and an opening B16c extending from the +Y end of the opening B16b toward the +Y side to the position overlapping the opening B15 of the fifth plate member 15.

The opening D16 is positioned on the -X side relative to the opening B16c. In top view, the opening D16 extends obliquely from the position overlapping the opening D15 of the fifth plate member 15 so as to be closer to the -Y side toward the -X side, and then the opening D16 bends in an arc-like shape and extends toward the -Y side.

The opening K16 is provided in the -Y side portion of the sixth plate member 16. In top view, the opening K16 includes an opening K16a extending from the position overlapping the opening K15 (see Fig. 10) of the fifth plate member 15 toward the +Y side, bending toward the -X side, and then extending toward the -X side, and an opening K16b bending from the -X end of the opening K16a toward the +Y side and then extending toward the +Y side.

In top view, the opening L16 extends straight and obliquely to both the X direction and the Y direction. In top view, the opening L16 extends obliquely from the position overlapping the opening L15 (see Fig. 10) of the fifth plate member 15 to the middle position between the opening M16 and the opening 10e16 in the Y direction, so as to be closer to the +Y side toward the -X side.

In top view, the opening Q16 is positioned between the opening M16 and the opening K16a. In top view, the opening Q16 extends from the position overlapping the opening Q15 (see Fig. 10) of the fifth plate member 15 toward the -Y side.

### <Seventh Plate Member>

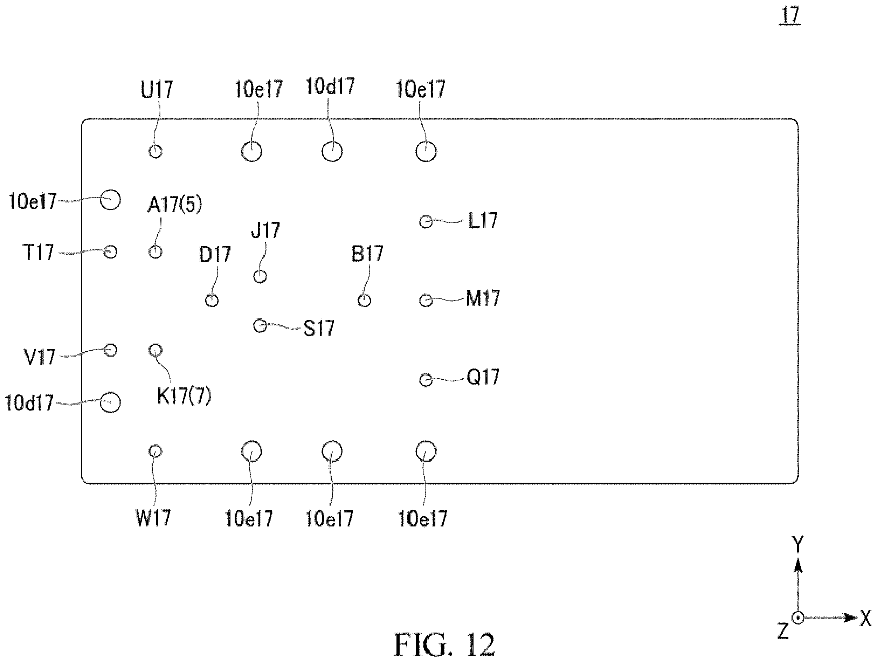

Fig. 12 is a top view showing the seventh plate member 17 forming the tube seat 10 of the first embodiment. As shown in Fig. 12, the seventh plate member 17 is shaped like a rectangular plate which is long in the X direction and short in the Y direction. The seventh plate member 17 has openings A17, B17, D17, J17 to M17, Q17, and S17 to W17 and openings 10d17 and 10e17 associated with the channels A, B, D, J to M, Q, and S to W and the openings 10d and 10e (see Fig. 4) described above. The openings of the seventh plate member 17 that form a part of the channels or the openings of the tube seat 10 described above (in other words, the portions connected to the openings of the sixth plate member 16) are denoted by reference signs ending with "17."

The openings A17, J17, M17, and S17 to W17 and the openings 10d17 and 10e17 of the seventh plate member 17 have a circular shape and overlap in top view the openings A16, J16, M16, and S16 to W16, and the openings 10d16 and 10e16 of the sixth plate member 16 (see Fig. 11), respectively.

The opening B17 of the seventh plate member 17 has a circular shape and is positioned to overlap the -Y end of the opening B16c of the sixth plate member 16 (see Fig. 11) in top view. The opening D17 of the seventh plate member 17 has a circular shape and is positioned to overlap the -Y end of the opening D16 of the sixth plate member 16 (see Fig. 11) in top view. The opening K17 of the seventh plate member 17 has a circular shape and is positioned to overlap the +Y end of the opening K16b of the sixth plate member 16 (see Fig. 11) in top view. The opening L17 of the seventh plate member 17 has a circular shape and is positioned to overlap the -X end of the opening L16 of the sixth plate member 16 (see Fig. 11) in top view. The opening Q17 of the seventh plate member 17 has a circular shape and is positioned to overlap the -Y end of the opening Q16 of the sixth plate member 16 (see Fig. 11) in top view.

The opening A17 of the seventh plate member 17 corresponds to the input port 5 of the tube seat 10. The opening J17 leads to the output port 35b of the double check valve 35 (see Fig. 2). The opening K17 corresponds to the output port 7 of the tube seat 10. The opening L17 leads to the port 34b of the variable load valve 34 (see Fig. 2). The opening S17 leads to the other input port 35c of the double check valve 35 (see Fig. 2). The openings T17 to W17 lead to ports (not shown) of the double check valve 35.

### <Sub Plate>

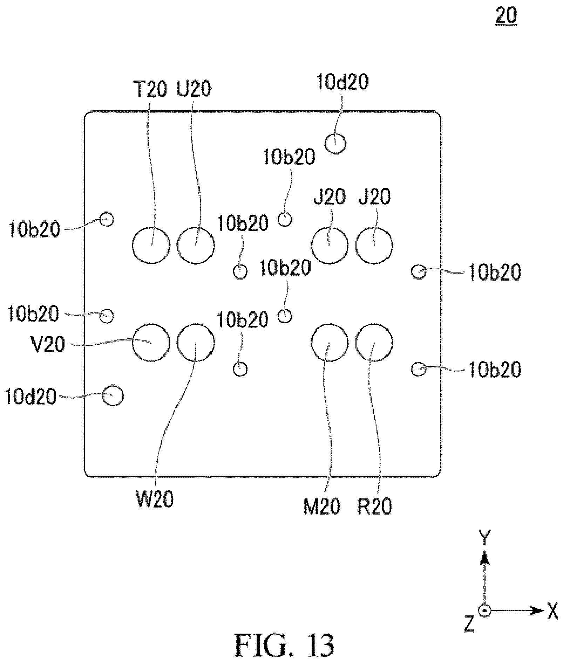

Fig. 13 is a top view showing a sub plate 20 forming the tube seat 10 of the first embodiment. As shown in Fig. 13, the sub plate 20 is shaped like a rectangular plate having a side along the X direction and a side along the Y direction. The sub plate 20 has openings J20, M20, R20, and T20 to W20 and openings 10b20 and 10d20 associated with the channels J, M, R, and T to W and the openings 10b and 10d (see Fig. 4) described above. The openings of the sub plate 20 that form a part of the channels or the openings of the tube seat 10 described above are denoted by reference signs ending with "20."

The openings J20, M20, R20, and T20 to W20 and the openings 10b20 and 10d20 are open in the thickness direction of the sub plate 20. The openings J20, M20, R20, and T20 to W20 and the openings 10b20 and 10d20 have a circular shape in top view. The openings J20, M20, R20, and T20 to W20 of the sub plate 20 have a larger diameter than the openings J11, M11, R11, and T11 to W11 (see Fig. 6) of the first plate member 11, respectively.

### <First Brazing Sheet>

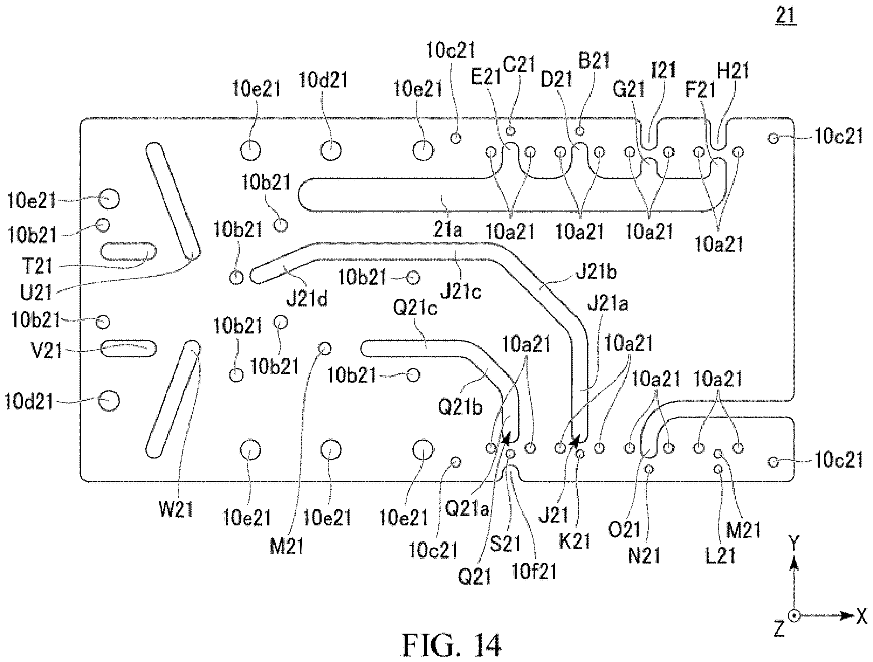

Fig. 14 is a top view showing a first brazing sheet 21 forming the tube seat 10 of the first embodiment. As shown in Fig. 14, the first brazing sheet 21 is shaped like a rectangular plate which is long in the X direction and short in the Y direction. In top view, the first brazing sheet 21 has the same shape as the second plate member 12 (see Fig. 7) described above. The first brazing sheet 21 has openings B21 to 021 and Q21 to W21 and openings 10a21 to 10f21 associated with the channels B to O and Q to W and the openings 10a to 10f (see Fig. 4) described above. The openings of the first brazing sheet 21 that form a part of the channels or the openings of the tube seat 10 described above (in other words, the portions overlapping the openings of the second plate member 12 in top view) are denoted by reference signs ending with "21" appended thereto or substituted for "12."

### <Second Brazing Sheet>

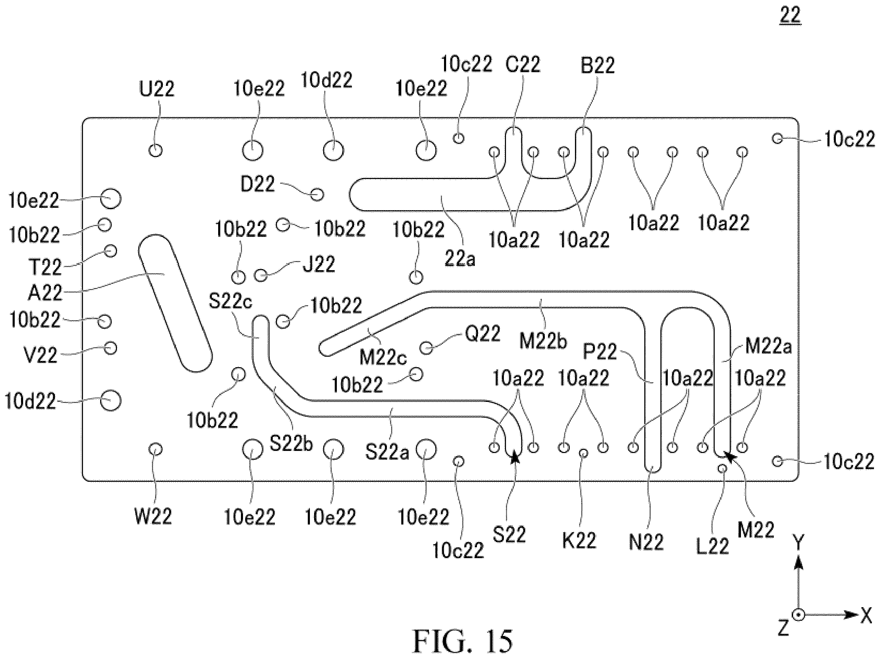

Fig. 15 is a top view showing a second brazing sheet 22 forming the tube seat 10 of the first embodiment. As shown in Fig. 15, the second brazing sheet 22 is shaped like a rectangular plate which is long in the X direction and short in the Y direction. In top view, the second brazing sheet 22 has the same shape as the fourth plate member 14 (see Fig. 9) described above. The second brazing sheet 22 has openings A22, B22 to D22, J22 to N22, P22, Q22, and S22 to W22 and openings 1 0a22 to 10e22 associated with the channels A to D, J to N, P, Q, and S to W and the openings 10a to 10e (see Fig. 4) described above. The openings of the second brazing sheet 22 that form a part of the channels or the openings of the tube seat 10 described above (in other words, the portions overlapping the openings of the fourth plate member 14 in top view) are denoted by reference signs ending with "22" appended thereto or substituted for "14."

### <Third Brazing Sheet>

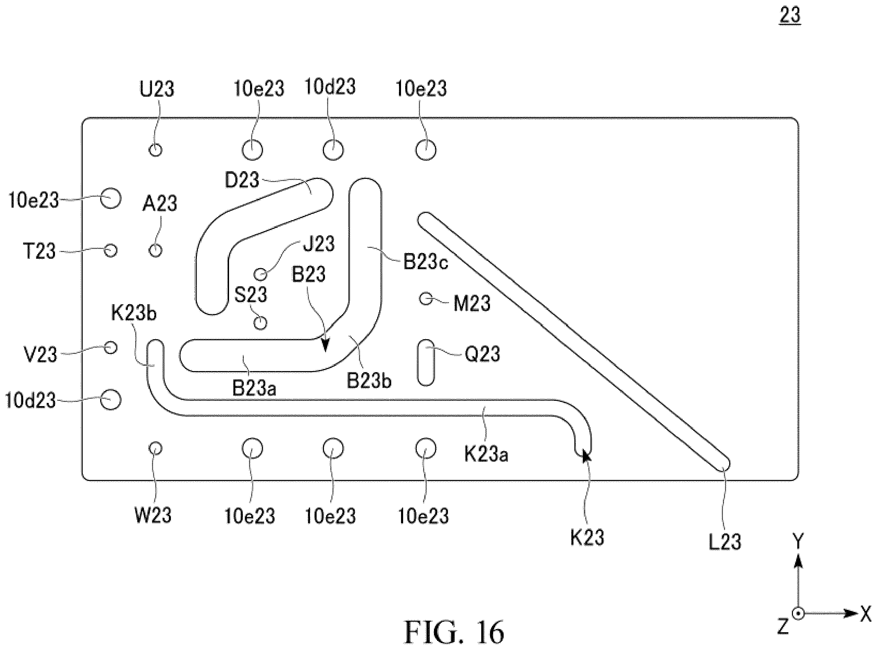

Fig. 16 is a top view showing a third brazing sheet 23 forming the tube seat 10 of the first embodiment. As shown in Fig. 16, the third brazing sheet 23 is shaped like a rectangular plate which is long in the X direction and short in the Y direction. In top view, the third brazing sheet 23 has the same shape as the sixth plate member 16 (see Fig. 11) described above. The third brazing sheet 23 has openings A23, B23, D23, J23 to M23, Q23, and S23 to W23 and openings 10d23 and 10e23 associated with the channels A, B, D, J to M, Q, and S to W and the openings 10d and 10e (see Fig. 4) described above. The openings of the third brazing sheet 23 that form a part of the channels or the openings of the tube seat 10 described above (in other words, the portions overlapping the openings of the sixth plate member 16 in top view) are denoted by reference signs ending with "23" appended thereto or substituted for "16."

### <Fourth Brazing Sheet>

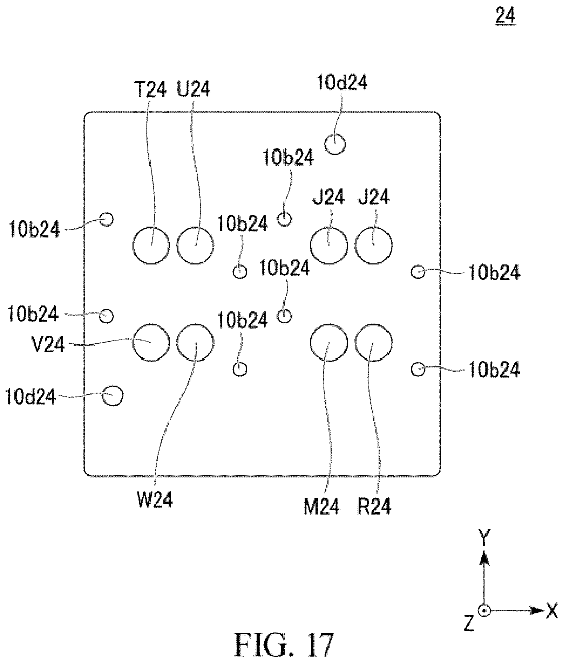

Fig. 17 is a top view showing a fourth brazing sheet 24 forming the tube seat 10 of the first embodiment. As shown in Fig. 17, the fourth brazing sheet 24 is shaped like a rectangular plate having a side along the X direction and a side along the Y direction. In top view, the fourth brazing sheet 24 has the same shape as the sub plate 20 (see Fig. 13) described above. The fourth brazing sheet 24 has openings J24, M24, R24, and T24 to W24 and openings 10b24 and 10d24 associated with the channels J, M, R, and T to W and the openings 10b and 10d (see Fig. 4) described above. The openings of the fourth brazing sheet 24 that form a part of the channels or the openings of the tube seat 10 described above (in other words, the portions overlapping the openings of the sub plate 20 in top view) are denoted by reference signs ending with "24" appended thereto or substituted for "20."

### <Channels>

As shown in Fig. 3, the channels A to W are formed by a plurality of plate-shaped members 11 to 17 and 20 to 24 constituting the tube seat 10. The tube seat 10 is formed of the brazing sheets 21 to 24 (an example of plate-shaped members having a first thickness) and the plate members 11 to 17 and 20 (an example of plate-shaped members having a second thickness larger than the first thickness) stacked alternately. This alternate configuration indicates that adhesive layers such as those formed of a brazing material may be interposed between the plate members. The channels A to W are formed by the brazing sheets 21 to 24 and the plate members 11 to 17 and 20.

As shown in Fig. 2, the channel A, B (an example of a channel) extending from the input port 5 of the tube seat 10 to the input port of the feed valve 30A is constituted by the channel A and the channel B. The channel A (an example of a first channel extending in an in-plane direction) is connected to the input port 5 of the tube seat 10, and the channel B (an example of a second channel extending in an in-plane direction) connected to the input port of the feed valve 30A. The extension in an in-plane direction mentioned above indicates a direction along the surface of the plate members as viewed from the thickness direction of the plate members. As shown in Fig. 3, the plurality of plate-shaped members 11 to 17 and 20 to 24 include: the fourth plate member 14 having the channel A (an example of a plate-shaped member having a first channel); the sixth plate member 16 having the channel B (an example of a plate-shaped member having a second channel); and the fifth plate member 15 provided between the fourth plate member 14 and the sixth plate member 16 (an example of a plate-shaped member having only a hole connecting between one end of the first channel and one end of the second channel). As shown in Fig. 10, the fifth plate member 15 has the opening A15 (an example of only the hole connecting between one end of the first channel and one end of the second channel) that connects between one end of the opening A14 of the fourth plate member 14 (an example of one end of the first channel) and one end of the opening B16 of the sixth plate member 16 (an example of one end of the second channel).

The plurality of plate-shaped members 11 to 17 and 20 to 24 include: the third plate member 13 having the opening B13 (see Fig. 8; an example of a plate-shaped member having a first hole); the fifth plate member 15 having the opening B15 (see Fig. 10; an example of a plate-shaped member having a second hole); and the fourth plate member 14 provided between the third plate member 13 and the fifth plate member 15 (see Fig. 9). As shown in Fig. 9, the fourth plate member 14 has the opening B14 (an example of a third channel connecting between the first hole and the second hole) that connects between the opening B15 of the third plate member 13 (an example of the first hole) and the opening B15 of the fifth plate member 15 (an example of the second hole).

As shown in Fig. 2, the channel A forms a channel connecting the input port 5 of the tube seat 10 to the pressure regulating valve 50 and the output valve 51 (an example of pilot pressure regulating valves) forming the variable load valve 34. As shown in Fig. 3, the channel A is formed by the fourth plate member 14, the second brazing sheets 22 provided on the upper surface and the lower surface of the fourth plate member 14, the fifth plate member 15, the sixth plate member 16, the third brazing sheets 23 provided on the upper surface and the lower surface of the sixth plate member 16, and the seventh plate member 17 (an example of a plurality of plate-shaped members).

As shown in Fig. 2, the channel R forms a channel connecting between a port of the variable load valve 34 (an example of an air spring port) and the air spring pressure sensor 43. As described above, the channel A forms a channel connecting the input port 5 of the tube seat 10 to the pressure regulating valve 50 and the output valve 51 (an example of pilot pressure regulating valves) forming the variable load valve 34. As shown in Fig. 3, the channel R and the channel A are formed by the first plate member 11, the second plate member 12, the first brazing sheets 21 provided on the upper surface and the lower surface of the second plate member 12, the third plate member 13, the fourth plate member 14, the second brazing sheets 22 provided on the upper surface and the lower surface of the fourth plate member 14, the fifth plate member 15, the sixth plate member 16, the third brazing sheets 23 provided on the upper surface and the lower surface of the sixth plate member 16, and the seventh plate member 17 (an example of a plurality of plate-shaped members).

As shown in Fig. 2, the channel M forms a channel connecting the pressure regulating valve 50 and the output valve 51 (an example of pilot pressure regulating valves) forming the variable load valve 34 to the pilot pressure sensor 42B (an example of a pilot pressure sensor). As shown in Fig. 3, the channel M is formed by the first plate member 11, the second plate member 12, the first brazing sheets 21 provided on the upper surface and the lower surface of the second plate member 12, the third plate member 13, the fourth plate member 14, the second brazing sheets 22 provided on the upper surface and the lower surface of the fourth plate member 14, the fifth plate member 15, the sixth plate member 16, the third brazing sheets 23 provided on the upper surface and the lower surface of the sixth plate member 16, the seventh plate member 17, the sub plate 20, and the fourth brazing sheet 24 provided on the lower surface of the sub plate 20 (an example of a plurality of plate-shaped members).

### <Relationship between Arrangement of Pressure Sensors and Substance of Plate-shaped Members>

The plurality of plate-shaped members 11 to 17 and 20 to 24 include: the sub plate 20 (an example of a plate-shaped member having a sensor fastener) to which the pilot pressure sensor 42B (an example of a pilot pressure sensor) is mounted; and the fourth brazing sheet 24 (an example of a plate-shaped member having a fourth channel) forming the channel M connecting the pressure regulating valve 50 and the output valve 51 (an example of pilot pressure regulating valves) forming the variable load valve 34 to the pilot pressure sensor 42B. The sub plate 20 is preferably formed of a metal having a higher corrosion resistance than the metal forming the fourth brazing sheet 24.

For example, when the metal forming the fourth brazing sheet 24 is aluminum, the sub plate 20 is preferably formed of a stainless steel. The substances of the plate-shaped members such as the sub plate 20 and the fourth brazing sheet 24 are not limited to the above but may be modified in accordance with required specifications. For example, when the metal forming the fourth brazing sheet 24 is iron or steel, the sub plate 20 is preferably formed of a metal having a higher corrosion resistance to water than iron or steel (for example, copper, zinc, stainless steels, or aluminum).

### <Method of Manufacturing Brake Control Device>

The following describes an example of the method of manufacturing the brake control device of the embodiment. The method of manufacturing the brake control device includes a tube seat manufacturing step and a fixing step. The tube seat manufacturing step is to manufacture the tube seat 10 having the input port 5 through which the compressed air (an example of a fluid) is input from the supply air tank 2 (an air source; an example of a fluid source). The fixing step is to fix the regulating valves 30 to 35 and the pressure sensors 41 to 43 to the tube seat 10. The regulating valves 30 to 35 regulate the flow rate or the pressure of the compressed air input through the input port 5 (an example of a fluid input through an input port) to output working air (an example of a fluid for operating a brake device) for operating a brake cylinder 3 (an example of the brake device).

In the tube seat manufacturing step, the plurality of plate-shaped members 11 to 17 and 20 to 24 are laminated and metal-joined to each other such that the plurality of plate-shaped members 11 to 17 and 20 to 24 form the channels A to W connecting between the input port 5 and the regulating valves 30 to 35. In the tube seat manufacturing step, any two of the plurality of plate-shaped members 11 to 17 and 20 to 24 adjacent to each other in the lamination direction (the Z direction) are brazed together at respective surfaces facing each other. The tube seat manufacturing step is followed by the fixing step.

In the fixing step, the regulating valves 30 to 35 and the pressure sensors 41 to 43 are fastened to the surface of the tube seat 10 with bolts. In the fixing step, the regulating valves 30 and 31 (an example of pilot pressure regulating valves), the pilot pressure sensor 42, and the air spring pressure sensors 41 and 43 are fixed to the upper surface of the tube seat 10 (an example of a same side of the tube seat 10). In the fixing step, the variable load valve 34 and the double check valve 35 are fixed to the lower surface of the tube seat 10 (an example of a same side of the tube seat 10). The brake control device of the embodiment is manufactured through the above steps.

### <Advantageous Effects>

As described above, the brake control device 1 according to the embodiment includes: the tube seat 10 having the input port 5 for receiving compressed air from the supply air tank 2; and the regulating valves 30 to 35 for regulating the flow rate or pressure of the compressed air received through the input port 5 to output working air for operating the brake cylinder 3. The tube seat 10 is formed of the plurality of plate-shaped members 11 to 17 and 20 to 24 that are laminated and metal-joined to each other. The channels A to W connecting between the input port 5 and the regulating valves 30 to 35 are formed by the plurality of plate-shaped members 11 to 17 and 20 to 24.

With this configuration, since the channels A to W connecting between the input port 5 and the regulating valves 30 to 35 are formed by the plurality of plate-shaped members 11 to 17 and 20 to 24, the channels A to W can be positioned freely in three-dimensional arrangement. Therefore, the channels A to W can be densified and sophisticated, as compared to the case where the channels A to W are formed in a single-layer tube seat. In addition, the tube seat 10 is formed of the plurality of plate-shaped members 11 to 17 and 20 to 24 that are laminated and metal-joined to each other. Since metal joining provides a higher joining strength than the existing joining method using an adhesive, leakage of the compressed air can be inhibited. Accordingly, it is possible to both inhibit the leakage of the compressed air and make the channels A to W dense and sophisticated.

The plurality of plate-shaped members 11 to 17 and 20 to 24 according to the embodiment include: the brazing sheets 21 to 24 having a first thickness; and plate members 11 to 17 and 20 having a second thickness larger than the first thickness. The channels A to W are formed by alternately stacking the brazing sheets 21 to 24 having the first thickness and the plate members 11 to 17 and 20 having the second thickness. With this configuration, it is possible to both reduce the total number of the plate-shaped members and downsize the tube seat 10 including the channels A to W having a desired flow rate, as compared to the case where the tube seat is formed by stacking a plurality of plate-shaped members having a same thickness.

The plurality of plate-shaped members 11 to 17 and 20 to 24 according to the embodiment include: the fourth plate member 14 having the channel A extending in an in-plane direction; the sixth plate member 16 having the channel B extending in an in-plane direction; and the fifth plate member 15 provided between the fourth plate member 14 and the sixth plate member 16. The fifth plate member 15 has the opening A15 that connects between one end of the opening A14 of the fourth plate member 14 and one end of the opening B16 of the sixth plate member 16. With this configuration, both surfaces of the fifth plate member 15 having the opening A15 have an adequate junction area, and therefore, the joining strength can be increased as compared to the case where the fourth plate member 14 and the sixth plate member 16 are stacked directly.

The plurality of plate-shaped members 11 to 17 and 20 to 24 according to the embodiment include: the third plate member 13 having the opening B13; the fifth plate member 15 having the opening B15; and the fourth plate member 14 provided between the third plate member 13 and the fifth plate member 15. The fourth plate member 14 has the opening B14 that connects between the opening B13 of the third plate member 13 and the opening B15 of the fifth plate member 15. With this configuration, since the channel B is formed by the plurality of plate-shaped members 13, 14, and 15, the channel B can be positioned freely in three-dimensional arrangement. Therefore, the channel B can be densified and sophisticated, as compared to the case where the channel B is formed in a single-layer tube seat.

Based on the pressure of the air springs 50d and 51d that receive the load of the vehicle, the regulating valves 50 and 51 according to the embodiment regulate the pressure of the compressed air input through the input port 5 and output a pilot pressure. Thus, the regulating valves 50 and 51 serve as pilot pressure regulating valves. The channel A connecting between the input port 5 and the pilot pressure regulating valves 50 and 51 are formed by the plurality of plate-shaped members 14, 15, 16, 17, 22, and 23. With this configuration, it is possible to both inhibit the leakage of the compressed air and make the channel connecting between the input port 5 and the pilot pressure regulating valves 50 and 51 dense and sophisticated.

The tube seat 10 according to the embodiment includes the air spring port 6 for receiving the pressure of the air springs 50d and 51d that receive the load of the vehicle. The brake control device 1 includes the air spring pressure sensor 43 for sensing the pressure of the air input through the air spring port 6. The channel R connecting between the air spring port 6 and the air spring pressure sensor 43 and the channel A connecting between the input port 5 and the pilot pressure regulating valves 50 and 51 are formed by the plurality of plate-shaped members 11 to 17 and 21 to 23. With this configuration, the channel R connecting between the air spring port 6 and the air spring pressure sensor 43 is also formed in one laminated tube seat 10, thus facilitating downsizing.

The pilot pressure regulating valves 30 and 31 and the air spring pressure sensors 41 and 43 according to the embodiment are fixed to a same side of the tube seat 10. With this configuration, since the pilot pressure regulating valves 30 and 31 and the air spring pressure sensors 41 and 43 are fixed to a same side of the tube seat 10, the pilot pressure regulating valves 30 and 31 and the air spring pressure sensors 41 and 43 are more accessible to a worker for maintenance, as compared to the case where they are fixed to difference sides of the tube seat 10.

The brake control device 1 according to the embodiment includes the pilot pressure sensor 42B for sensing the pilot pressure output by the pilot pressure regulating valves 50 and 51. The channel M connecting between the pilot pressure regulating valves 50 and 51 and the pilot pressure sensor 42B is formed by the plurality of plate-shaped members 11 to 17 and 20 to 24. The pilot pressure sensor 42B and the air spring pressure sensors 41 and 43 are fixed to a same side of the tube seat 10. With this configuration, since the pilot pressure sensor 42B and the air spring pressure sensors 41 and 43 are fixed to a same side of the tube seat 10, the pilot pressure sensor 42B and the air spring pressure sensors 41 and 43 are more accessible to a worker for maintenance, as compared to the case where they are fixed to difference sides of the tube seat 10.

The plate-shaped members 11 and 17, which are the outermost ones of the plurality of plate-shaped members 11 to 17 and 20 to 24 according to the embodiment, have the valve mounting openings 10a for mounting the pilot pressure regulating valves 50 and 51. With this configuration, the pilot pressure regulating valves 50 and 51 can be bolted through the valve mounting openings 10a of the plate-shaped members 11 and 17 at the outermost layers.

The brake control device 1 according to the embodiment includes the pilot pressure sensor 42B for sensing the pilot pressure output by the pilot pressure regulating valves 50 and 51. The sub plate 20, which is the outermost one of the plurality of plate-shaped members 11 to 17 and 20 to 24, has the sensor mounting openings 10b for mounting the pilot pressure sensor 42B. With this configuration, the pilot pressure sensor 42B can be bolted through the sensor mounting openings 10b of the sub plate 20 at the outermost layer.

The pilot pressure regulating valves 30 and 31 and the pilot pressure sensor 42B according to the embodiment are fixed to a same side of the tube seat 10. With this configuration, since the pilot pressure regulating valves 30 and 31 and the pilot pressure sensor 42B are fixed to a same side of the tube seat 10, the pilot pressure regulating valves 30 and 31 and the pilot pressure sensor 42B are more accessible to a worker for maintenance, as compared to the case where they are fixed to difference sides of the tube seat 10.

The plurality of plate-shaped members 11 to 17 and 20 to 24 according to the embodiment include: the sub plate 20 having the sensor mounting openings 10b for mounting the pilot pressure sensor 42B; and the fourth brazing sheet 24 having the channel M connecting between the pilot pressure regulating valves 50 and 51 and the pilot pressure sensor 42B. The sub plate 20 is formed of a metal having a higher corrosion resistance than the metal forming the fourth brazing sheet 24. With this configuration, the sub plate 20 can be inhibited from rusting even if moisture accumulates around the sensor mounting openings 10b for mounting the pilot pressure sensor 42B.

The method of manufacturing the brake control device according to the embodiment includes a tube seat manufacturing step and a fixing step. The tube seat manufacturing step is to manufacture the tube seat 10 having the input port 5 through which the compressed air is input from the supply air tank 2. The fixing step is to fix the regulating valves 30 to 35 and the pressure sensors 41 to 43 to the tube seat 10. The regulating valves 30 to 35 regulate the flow rate or the pressure of the compressed air input through the input port 5 to output working air for operating the brake cylinder 3. In the tube seat manufacturing step, the plurality of plate-shaped members 11 to 17 and 20 to 24 are laminated and metal-joined to each other such that the plurality of plate-shaped members 11 to 17 and 20 to 24 form the channels A to W connecting between the input port 5 and the regulating valves 30 to 35. In the fixing step, the regulating valves 30 to 35 and the pressure sensors 41 to 43 are fastened to the surface of the tube seat 10 with bolts.

With this method, since the channels A to W connecting between the input port 5 and the regulating valves 30 to 35 are formed by the plurality of plate-shaped members 11 to 17 and 20 to 24, the channels A to W can be positioned freely in three-dimensional arrangement. Therefore, the channels A to W can be densified and sophisticated, as compared to the case where the channels A to W are formed in a single-layer tube seat. In addition, the plurality of plate-shaped members 11 to 17 and 20 to 24 are laminated and metal-joined to each other. Since metal joining provides a higher joining strength than the existing joining method using an adhesive, leakage of the compressed air can be inhibited. Accordingly, it is possible to both inhibit the leakage of the compressed air and make the channels A to W dense and sophisticated.

### <Second Embodiment>

### <Brake Control Device>

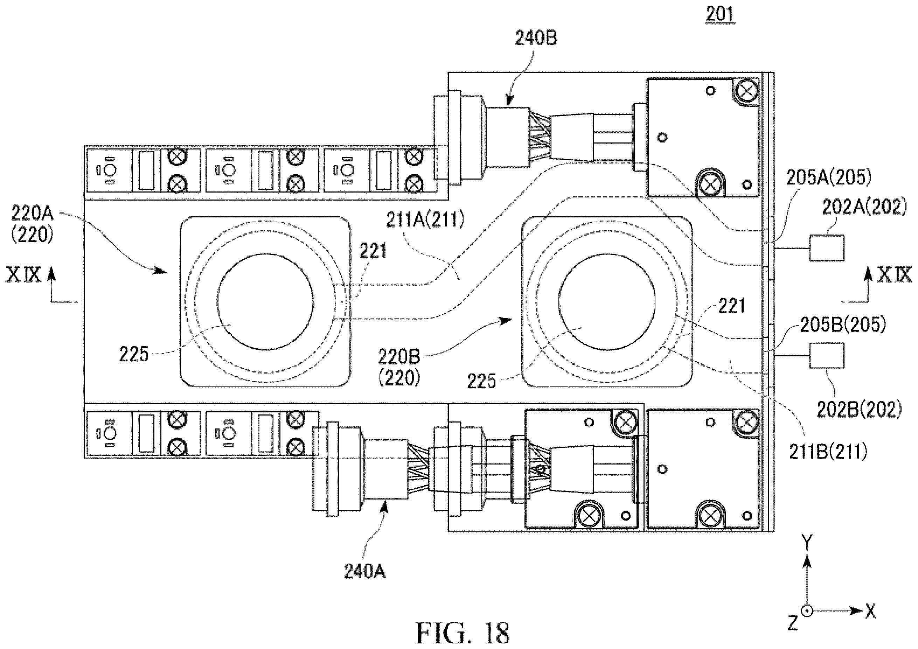

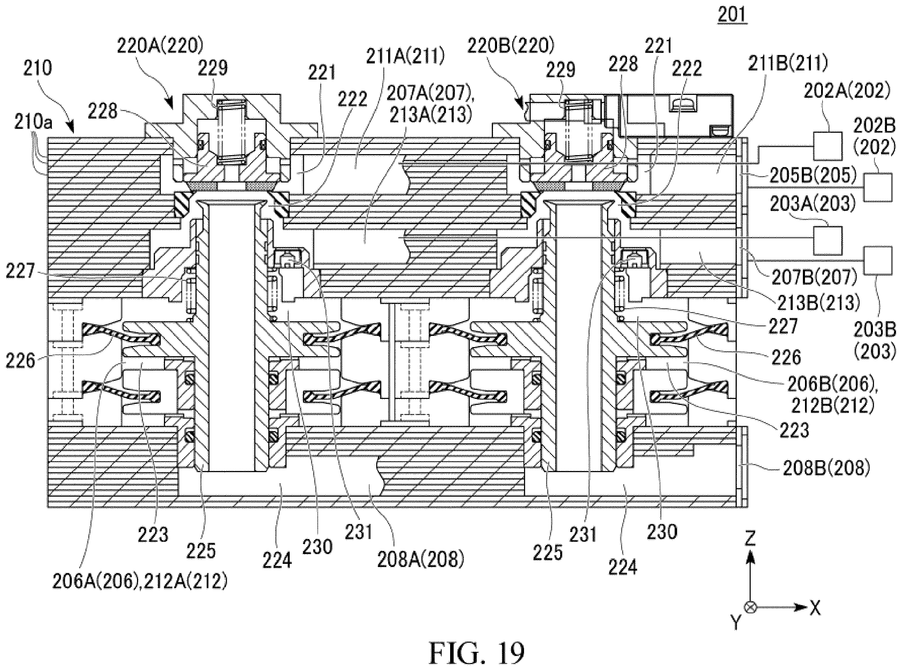

Fig. 18 is a top view showing a brake control device 201 of a second embodiment. Fig. 19 is a view including the XIX-XIX section of Fig. 18. The foregoing description of the first embodiment is based on an example in which a relay valve is provided outside the tube seat, but this is not limitative. For example, the relay valve may be provided in the tube seat. The first and second embodiments have some common features, which are denoted by the same reference numerals and will not be described in detail.

As shown in Fig. 19, the brake control device 201 has a pilot pressure port 206 for receiving a pilot pressure (for example, a pilot pressure output by a pilot pressure regulating valve (not shown)). The pilot pressure port 206 is provided in a tube seat 210. The tube seat 210 is formed of a plurality of plate-shaped members 210a that are laminated and metal-joined (for example, brazed) to each other.

A relay valve 220 (an example of a regulating valve) regulates the flow rate or the pressure of the compressed air input through an input port 205 (an example of a fluid input through an input port) in accordance with the pilot pressure input through the pilot pressure port 206. The relay valve 220 receives a pressure regulated by a feed valve and an exhaust valve (not shown) as the pilot pressure and outputs a brake pressure through an output port 207. The channel 211 connecting between the input port 205 and the relay valve 220 is formed by the plurality of plate-shaped members 210a. The channel 212 connecting between the pilot pressure port 206 and the relay valve 220 is formed by the plurality of plate-shaped members 210a.

A plurality (for example, two in the embodiment) of relay valves are provided. The two relay valves 220 are: a first relay valve 220A for outputting the compressed air (an example of a fluid) to a first brake cylinder 203A (an example of a first brake device) for braking one of the wheels of one bogie arranged in the front-rear direction (an example of a first wheel); and a second relay valve 220B for outputting the compressed air (an example of a fluid) to a second brake cylinder 203B (an example of a second brake device) for braking the other of the wheels of one bogie arranged in the front-rear direction (an example of a second wheel).

The first relay valve 220A and the second relay valve 220B are spaced apart from each other in the front-rear direction of the bogie. The first relay valve 220A is positioned on the -X side relative to the second relay valve 220B. In the drawings, components of one of the two relay valves 220A and 220B (the first relay valve 220A on the -X side) are denoted by a number with an appended sign "A," and components of the other relay valve (the second relay valve 220B on the +X side) are denoted by a number with an appended sign "B." The appended sign is omitted when these components do not need to be distinguished.

As shown in Fig. 18, input ports 205A and 205B are provided in association with the relay valves 220A and 220B, respectively. The input ports 205A and 205B are: the first input port 205A for inputting the compressed air (an example of a fluid) from a first supply air tank 202A (an air source; an example of a fluid source) to the first relay valve 220A; and the second input port 205B for inputting the compressed air (an example of a fluid) from a second supply air tank 202B (an air source; an example of a fluid source) to the second relay valve 220B.

The number of the supply air tanks (air sources) is not limited to the above but may be modified in accordance with required specifications. For example, one supply air tank (an example of an air source) may input the compressed air to both the input ports 205A and 205B.

As shown in Fig. 19, pilot pressure ports 206A and 206B are provided in association with the relay valves 220A and 220B, respectively. The pilot pressure ports 206A and 206B are: the first pilot pressure port 206A for inputting the pilot pressure to the first relay valve 220A; and the second pilot pressure port 206B for inputting the pilot pressure to the second relay valve 220B.

Output ports 207A and 207B are provided in association with the relay valves 220A and 220B, respectively. The output ports 207A and 207B are: the first output port 207A for outputting the compressed air to the first brake cylinder 203A; and the second output port 207B for outputting the compressed air to the second brake cylinder 203B.

A channel 211A connecting between the first input port 205A and the first relay valve 220A is formed by the plurality of plate-shaped members 21 0a. A channel 212A connecting between the first pilot pressure port 206A and the first relay valve 220A is formed by the plurality of plate-shaped members 21 0a. A channel 213A connecting between the first relay valve 220A and the first output port 207A is formed by the plurality of plate-shaped members 210a.

A channel 211B connecting between the second input port 205B and the second relay valve 220B is formed by the plurality of plate-shaped members 21 0a. A channel 212B connecting between the second pilot pressure port 206B and the second relay valve 220B is formed by the plurality of plate-shaped members 210a. A channel 213B connecting between the second relay valve 220B and the second output port 207B is formed by the plurality of plate-shaped members 210a.

As shown in Fig. 18, the channel 211A connecting between the first input port 205A and the first relay valve 220A detours around the second relay valve 220B. Specifically, in top view, the channel 211A connecting between the first input port 205A and the first relay valve 220A extends from the port of the first relay valve 220A (the input port of an input chamber 221) toward the +X side, extends obliquely toward the +Y side of the second relay valve 220B, and then extends obliquely toward the +X side of the second relay valve 220B.

As shown in Fig. 19, each of the relay valves 220 includes: an input chamber 221 having an input port (in other words, a port leading to the channel 211); an output chamber 222 having an output port (in other words, a port leading to the channel 213); a control chamber 223 having a pilot port (in other words, a port leading to the pilot pressure port 206); and an exhaust chamber 224 having an exhaust port (in other words, a port leading to the exhaust port 208).

The input chamber 221 receives the source pressure through the input port 205. The control chamber 223 receives the pilot pressure through the pilot port. The output chamber 222 generates a brake pressure in accordance with the pilot pressure and outputs the brake pressure through the output port. The exhaust chamber 224 discharges excess pressure through the exhaust port.

Each of the relay valves 220 includes a hollow piston 225, a diaphragm 226, a spring 227, a valve element 228, and a spring 229. A throttle 231 is provided between a spring chamber 230 containing the spring 227 and the output chamber 222 to prevent the piston 225 from reacting to the transitional change in the output chamber 222 too sensitively.

The piston 225 is movable in the top-bottom direction. The diaphragm 226 projects laterally from the piston 225. The diaphragm 226 supports the piston 225 so as to be able to reciprocate in the top-bottom direction.

The two relay valves 220A and 220B are arranged laterally at an interval such that the respective diaphragms 226 are adjacent to each other. The positions of the relay valves 220A and 220B are not limited to the above but may be modified in accordance with required specifications.

The diaphragm 226 yields to the differential pressure between the air pressure in the control chamber 223 and the air pressure in the output chamber 222 and displaces the piston 225 while resisting the elastic force (resilience) of the spring 227. When the piston 225 is displaced upward, the valve element 228 is moved upward while resisting the elastic force (resilience) of the spring 229, so as to allow communication between the input chamber 221 and the output chamber 222.

The differential pressure between the air pressure in the control chamber 223 and the air pressure in the output chamber 222 becomes zero, and the piston 225 is displaced downward. When the piston 225 is displaced downward, the valve element 228 is moved downward by the spring 229, and the communication between the input chamber 221 and the output chamber 222 is prohibited.

When the piston 225 is displaced downward, communication is allowed between the output chamber 222 and the exhaust chamber 224 through the hollow portion of the piston 225. At this time, the output pressure also flows into the spring chamber 230 through the throttle 231 and acts in the direction to depress the piston 225. The differential pressure between the pressure in the control chamber 223 and the output pressure (the spring chamber 230) becomes zero, and the piston 225 is displaced upward, thus prohibiting the communication between the output chamber 222 and the exhaust chamber 224. In other words, the pressure in the output chamber 222 is regulated to a brake pressure according to the pilot pressure by the compressed air in the input chamber 221 flowing into the output chamber 222 and the compressed air in the output chamber 222 discharged into the exhaust chamber 224.

As shown in Fig. 18, the brake control device 201 may include forced-open valves 240A and 240B that forcibly discharge the brake pressure output from the relay valves 220A and 220B at a predetermined timing (for example, when an output from an opening electromagnetic valve (not shown) is input as the pilot pressure). In the example shown, two forced-open valves 240A and 240B are provided in association with the two relay valves 220A and 220B.

The forced-open valves 240A and 240B are elongated in the front-rear direction. In other words, the longitudinal direction of the forced-open valves 240A and 240B is orthogonal to the moving direction of the pistons 225 of the relay valves 220A and 220B (the top-bottom direction in which the pistons 225 move). The forced-open valve 240A is positioned on the -Y side relative to the relay valve 220A in top view. The forced-open valve 240B is positioned on the +Y side relative to the relay valve 220B in top view.

As described above, the brake control device 201 according to the embodiment includes the pilot pressure ports 206 for receiving the pilot pressure. The regulating valves 220 are relay valves that regulate the flow rate or the pressure of the compressed air input through the input ports 205 in accordance with the pilot pressure input through the pilot pressure ports 206. The channels 211 connecting between the input ports 205 and the relay valves 220 and the channels 212 connecting between the pilot pressure ports 206 and the relay valves 220 are formed by the plurality of plate-shaped members 21 0a. With this configuration in which the relay valves 220 are provided in the tube seat 210, it is possible to both inhibit the leakage of the compressed air and make the channels 211 and 212 dense and sophisticated.

The relay valves 220A and 220B according to the embodiment include: the first relay valve 220A for outputting the compressed air to the first brake cylinder 203A for braking the first wheel of one bogie; and the second relay valve 220B for outputting the compressed air to the second brake cylinder 203B for braking the second wheel of one bogie different from the first wheel. The input ports 205A and 205B include: the first input port 205A for inputting the compressed air from the first supply air tank 202A to the first relay valve 220A; and the second input port 205B for inputting the compressed air from the second supply air tank 202B to the second relay valve 220B. The pilot pressure ports 206A and 206B include: the first pilot pressure port 206A for inputting the pilot pressure to the first relay valve 220A; and the second pilot pressure port 206B for inputting the pilot pressure to the second relay valve 220B. The channel 211A connecting between the first input port 205A and the first relay valve 220A, the channel 212A connecting between the first pilot pressure port 206A and the first relay valve 220A, the channel 211B connecting between the second input port 205B and the second relay valve 220B, and the channel 212B connecting between the second pilot pressure port 206B and the second relay valve 220B are formed by the plurality of plate-shaped members 210a. With this configuration, the brake performance can be more accurate as compared to the case where only one relay valve 220 is provided. In addition, in the configuration in which the two relay valves 220A and 220B are provided in the tube seat 210, it is possible to both inhibit the leakage of the compressed air and make the channels 211A, 211B, 212A, and 212B dense and sophisticated.

In the brake control device 201 according to the embodiment, the first relay valve 220A and the second relay valve 220B are spaced apart from each other in the front-rear direction of the bogie. The channel 211A connecting between the first input port 205A and the first relay valve 220A detours around the second relay valve 220B. With this configuration, the thickness of the brake control device 201 in the width direction thereof can be reduced, as compared to the case where the two relay valves 220 are spaced apart from each other in the width direction of the vehicle.

### <Third Embodiment>

### <Dehumidification Device>

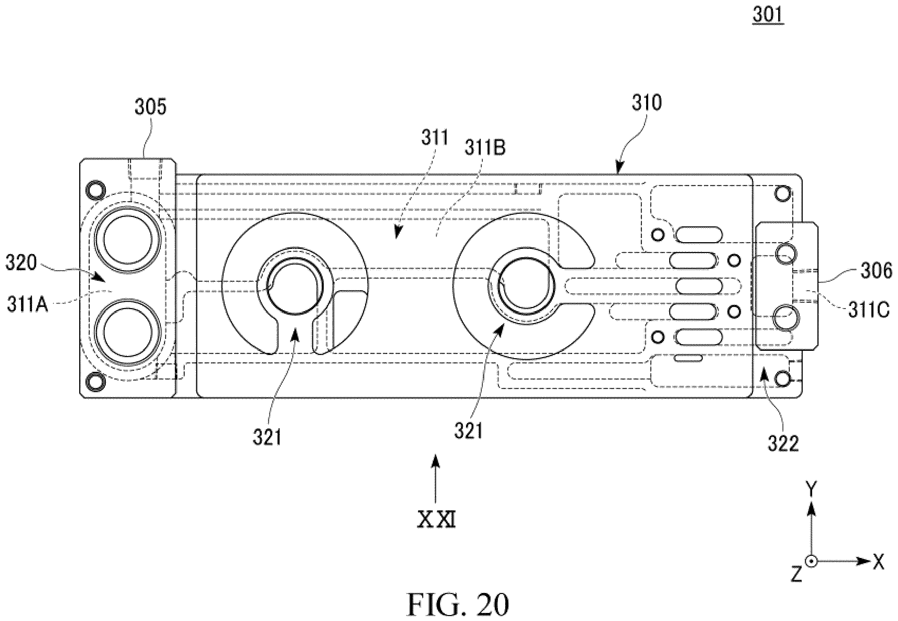

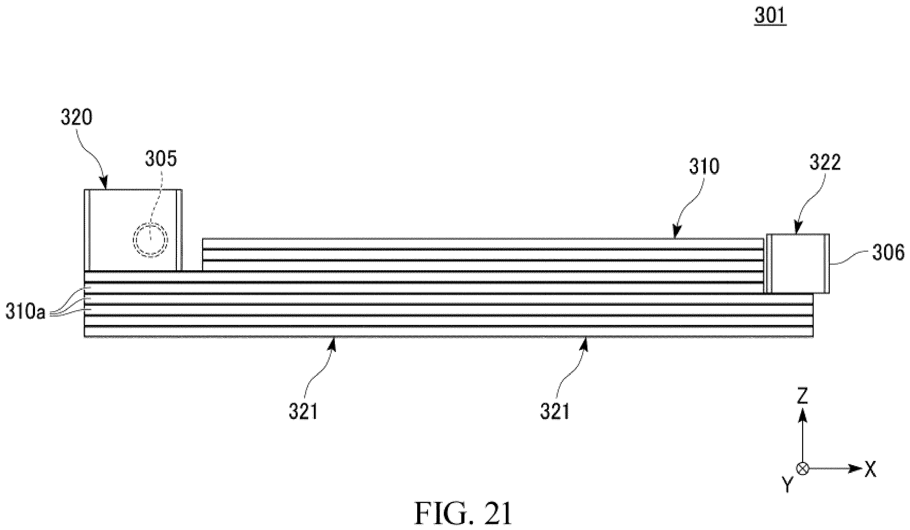

Fig. 20 is a top view showing a dehumidification device 301 of a third embodiment. Fig. 21 is a side view from the direction of the arrow XXI of Fig. 20. The above description of the first embodiment and the second embodiment is based on an example of a brake control device that is a control device of a brake device for braking (air-braking) a railway vehicle (vehicle), but this is not limitative. For example, the present invention is applicable to a dehumidification device for dehumidifying the compressed air used for generating a braking force (an example of a fluid used for generating a braking force) in a railway vehicle (vehicle). The dehumidification device receives the compressed air generated in an air compressor (not shown). The compressed air dehumidified by the dehumidification device is stored in a compressed air tank (not shown). The compressed air stored in the compressed air tank is used as necessary.

As shown in Fig. 20, the dehumidification device 301 includes a housing 310 having: a dehumidification unit inlet 305 for receiving the compressed air from the upstream side in the flowing direction of the compressed air; a dehumidification unit outlet 306 for discharging the dehumidified compressed air; and a channel 311 connecting between the dehumidification unit inlet 305 and the dehumidification unit outlet 306.

The housing 310 is shaped like a rectangular parallelepiped which is long in the X direction and short in the Y direction. As shown in Fig. 21, the housing 310 is formed of a plurality (nine in the example shown) of plate-shaped members 310a laminated together in the Z direction. The plurality of plate-shaped members 310a forming the housing 310 are brazed together (an example of metal joining). The method of joining the plurality of plate-shaped members 310a is not limited to brazing but may be any of other interface joining methods or welding methods. This method can be changed in accordance with required specifications.

As shown in Fig. 20, the dehumidification device 301 may include: a drain separation unit 320 disposed on the upstream side in the flowing direction of the compressed air; a first dehumidification unit 321 disposed downstream of the drain separation unit 320 in the flowing direction of the compressed air; and a second dehumidification unit 322 disposed downstream of the first dehumidification unit 321 in the flowing direction of the compressed air.

The drain separation unit 320 removes drains (such as oil and water) contained in the compressed air generated in the air compressor (not shown) For example, the drain separation unit 320 may be provided on one end portion (for example, the -X end portion) of the housing 310 in the front-rear direction thereof. For example, the drain separation unit 320 may include a spiral channel (not shown) connected to the dehumidification unit inlet 305 and formed in a spiral shape. For example, the drains contained in the compressed air are removed from the compressed air when passing through the spiral channel of the drain separation unit 320 and adhered to the inner wall surface of the spiral channel. After the drains are separated by the drain separation unit 320, the compressed air flows through the outlet of the drain separation unit 320 into the first dehumidification unit 321.

The first dehumidification unit 321 dehumidifies the compressed air from the drain separation unit 320. For example, the first dehumidification unit 321 may be provided on the middle portion of the housing 310 in the front-rear direction thereof. For example, a plurality (two in the example shown) of first dehumidification units 321 may be provided at intervals in the front-rear direction. For example, the first dehumidification unit 321 may be what is called a hollow fiber membrane dehumidification unit having a plurality of hollow fiber membranes (not shown) provided in the housing 310. For example, when the compressed air passes through the hollow fiber membranes, the water vapor contained in the compressed air penetrates the membranes, and thereby dehumidified compressed air is generated. The compressed air dehumidified by the first dehumidification unit 321 flows through the outlet of the first dehumidification unit 321 into the second dehumidification unit 322.

The second dehumidification unit 322 dehumidifies the compressed air from the first dehumidification unit 321. For example, the second dehumidification unit 322 may be provided on the other end portion (for example, the +X end portion) of the housing 310 in the front-rear direction thereof. For example, the second dehumidification unit 322 may be what is called an adsorbing dehumidification unit having an adsorbent (for example, silica gel) (not shown) provided in the housing 310. For example, the moisture contained in the compressed air is adsorbed by the adsorbent, and thereby dehumidified compressed air is generated. The compressed air dehumidified by the second dehumidification unit 322 flows through the outlet of the second dehumidification unit 322 (an example of the dehumidification unit outlet 306) and is stored in a compressed air tank (not shown) and used as necessary.

The aspect of installation of the drain separation unit 320, the first dehumidification unit 321, and the second dehumidification unit 322 is not limited to the above but may be modified in accordance with required specifications.

The channel 311 connecting between the dehumidification unit inlet 305 and the dehumidification unit outlet 306 is formed by the plurality (nine in the example shown in Fig. 21) of plate-shaped members 310a. For example, the channel 311 connecting between the dehumidification unit inlet 305 and the dehumidification unit outlet 306 may be constituted by a channel 311A connecting between the dehumidification unit inlet 305 and the outlet of the drain separation unit 320, a channel 311B connecting between the outlet of the drain separation unit 320 and the outlet of the first dehumidification unit 321, and a channel 311C connecting between the outlet of the first dehumidification unit 321 and the outlet of the second dehumidification unit 322.

As described above, the dehumidification device 301 according to the embodiment is a dehumidification device for dehumidifying the compressed air used for generating a braking force in a vehicle. The dehumidification device 301 includes the housing 310 having: the dehumidification unit inlet 305 for receiving the compressed air from the upstream side in the flowing direction of the compressed air; the dehumidification unit outlet 306 for discharging the dehumidified compressed air; and the channel 311 connecting between the dehumidification unit inlet 305 and the dehumidification unit outlet 306. The plurality of plate-shaped members 310a forming the housing 310 are laminated and metal-joined to each other. The channel 311 is formed by the plurality of plate-shaped members 310a.

With this configuration, since the channel 311 is formed by the plurality of plate-shaped members 310a, the channel 311 can be positioned freely in three-dimensional arrangement. Therefore, the channel 311 can be densified and sophisticated, as compared to the case where the channel 311 is formed in a single-layer housing 310. In addition, the housing 310 is formed of the plurality of plate-shaped members 310a that are laminated and metal-joined to each other. Since metal joining provides a higher joining strength than the existing joining method using an adhesive, leakage of the compressed air can be inhibited. Accordingly, it is possible to both inhibit the leakage of the compressed air and make the channel 311 dense and sophisticated.

The technical scope of the present invention is not limited to the embodiments described above but is susceptible of various modification within the purport of the present invention.

In the embodiments described above, the channels are formed by a plurality of plate-shaped members, but this example is not limitative. For example, the tube seat or the housing described above may include channels formed by a single plate-shaped member. For example, the aspect of the channels can be modified in accordance with required specifications.

In the embodiments described above, the air is used as the fluid, but this example is not limitative. For example, the fluid may be a gas other than the air, or it may be a liquid such as oil or water. For example, the aspect of the fluid can be modified in accordance with required specifications.

In the first embodiment described above, the brake control device includes: the tube seat having the input port for receiving compressed air from the supply air tank; and the regulating valves for regulating the flow rate or pressure of the compressed air received through the input port to output working air for operating the brake cylinder. However, this example is not limitative. For example, the brake control device may include: a tube seat having an input port for receiving an oil from a supply tank; and a regulating valve for regulating the flow rate or pressure of the oil received through the input port to output working oil for operating a brake cylinder. For example, the brake control device may drive the brake device by a gas such as the working air, or the brake control device may drive the brake device by a hydraulic pressure of oil or water. For example, the aspect of the brake control device can be modified in accordance with required specifications.

In the second embodiment described above, the regulating valves are relay valves that regulate the flow rate or the pressure of the compressed air input through the input ports in accordance with the pilot pressure input through the pilot pressure ports. However, this example is not limitative. For example, the regulating valves may be relay valves that regulate the flow rate or the pressure of the oil input through the input ports in accordance with the pilot pressure input through the pilot pressure ports. For example, the regulating valves may be relay valves that regulate the flow rate or the pressure of a gas such as the compressed air, or the regulating valves may be relay valves that regulate the flow rate of the pressure of a liquid such as oil or water. For example, the aspect of the regulating valves can be modified in accordance with required specifications.

In the third embodiment described above, the dehumidification device is a dehumidification device for dehumidifying the compressed air used for generating a braking force in a railway vehicle (vehicle). However, this example is not limitative. For example, the dehumidification device is applicable to wheeled vehicles other than railway vehicles, such as automobiles. For example, the dehumidification device is applicable to vehicles other than wheeled vehicles, such as airplanes and ships. For example, the dehumidification device may dehumidify a gas other than compressed air. For example, the aspect of the dehumidification device can be modified in accordance with required specifications.

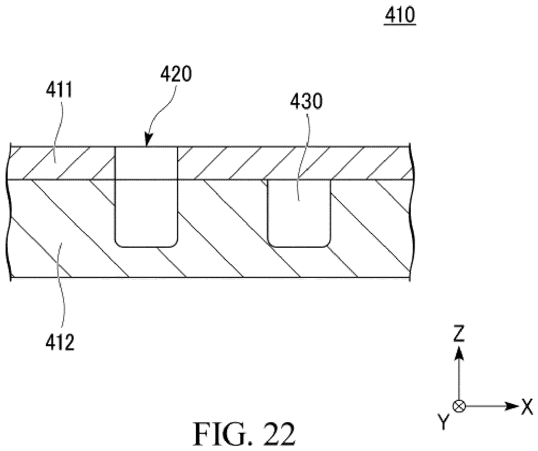

In the first embodiment described above, the plurality of plate-shaped members include plate-shaped members having a first thickness and plate-shaped members having a second thickness larger than the first thickness, and the channels are formed by the plate-shaped members having the first thickness and the plate-shaped members having the second thickness that are stacked alternately. However, this example is not limitative. For example, as shown in Fig. 22, a tube seat 410 may be formed of a plate-shaped member 411 having a first thickness and a plate-shaped member 412 having a second thickness larger than the first thickness that are laminated and metal-joined (for example, brazed) to each other, and the plate-shaped member 412 having the second thickness may have a sump 430 recessed in the thickness direction (the Z direction) from the joint surface between the plate-shaped member 412 and the plate-shaped member 411 having the first thickness. In the example shown in Fig. 22, the sump 430 is a recess disposed in the plate-shaped member 412 having the second thickness at a different position than a channel 420, and the recess is recessed downward from the upper surface of the plate-shaped member 412 having the second thickness. With this configuration, when the plate-shaped member 411 having the first thickness and the plate-shaped member 412 having the second thickness are metal-joined (for example, brazed) to each other, the molten brazing material flows into and remains in the sump 430, and thus the brazing material can be inhibited from accumulating in the channel 420. The sump is not necessarily provided in the plate-shaped member forming the tube seat of the brake control device, but it may be provided in a plate-shaped member forming a housing of a dehumidification device. For example, the aspect of installation of the sump can be modified in accordance with required specifications.

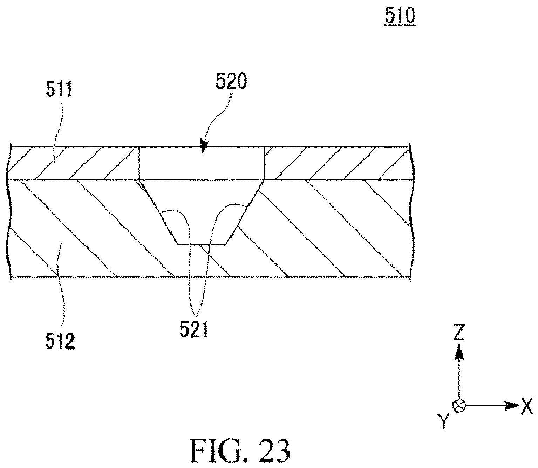

In the example shown in Fig. 22, the plate-shaped member having the second thickness includes the sump recessed in the thickness direction from the joint surface between the plate-shaped member having the second thickness and the plate-shaped member having the first thickness. However, this example is not limitative. For example, as shown in Fig. 23, a tube seat 510 may be formed of a plate-shaped member 511 having a first thickness and a plate-shaped member 512 having a second thickness larger than the first thickness that are laminated and metal-joined (for example, brazed) to each other, and the plate-shaped member 512 having the second thickness may have slopes 521 that define a channel 520 and are oblique to the thickness direction (the Z direction). In the example shown in Fig. 23, the slopes 521 form the opposite wall surfaces of the channel 520. In the example shown in Fig. 23, the channel 520 has a cross section shaped like an inverted trapezoid. With this configuration, when the plate-shaped member 511 having the first thickness and the plate-shaped member 512 having the second thickness are metal-joined (for example, brazed) to each other, the molten brazing material flows onto and remains on the slopes 521 of the channel 520, and thus the brazing material can be inhibited from accumulating on the bottom of the channel 520.

The elements of the embodiments described above may be replaced with known elements within the purport of the present invention. Further, the modifications described above may be combined. In the embodiments disclosed herein, a member formed of multiple components may be integrated into a single component, or conversely, a member formed of a single component may be divided into multiple components. Irrespective of whether or not the components are integrated, they are acceptable as long as they are configured to attain the object of the invention.

### LIST OF REFERENCE NUMBERS

1 brake control device
2 supply air tank (air source, fluid source)
3 brake cylinder (brake device)
5 input port
6 air spring port (fluid spring port)
10 tube seat
10a valve mounting opening (valve fastener)
10b sensor mounting opening (sensor fastener)
11 first plate member (plate-shaped member, the outermost one of a plurality of plate-shaped members)
12 second plate member (plate-shaped member)
13 third plate member (plate-shaped member)
14 fourth plate member (plate-shaped member)
15 fifth plate member (plate-shaped member)
16 sixth plate member (plate-shaped member)
17 seventh plate member (plate-shaped member, the outermost one of a plurality of plate-shaped members)
20 sub plate (plate-shaped member, the outermost one of a plurality of plate-shaped members)
21 first brazing sheet (plate-shaped member)
22 second brazing sheet (plate-shaped member)
23 third brazing sheet (plate-shaped member)
24 fourth brazing sheet (plate-shaped member)
30A to 30C feed valve (regulating valve)
31A to 31C exhaust valve (regulating valve)
32 electromagnetic valve (regulating valve)
33 emergency valve (regulating valve)
34 variable load valve (regulating valve)
35 double check valve (regulating valve)
41A to 41D air spring pressure sensor (fluid spring pressure sensor)
42A, 42B pilot pressure sensor
43 air spring pressure sensor (fluid spring pressure sensor)
50 pressure regulating valve (pilot pressure regulating valve)
50d full load securing spring (air spring)
51d empty load securing spring (air spring)
51 output valve (pilot pressure regulating valve)
201 brake control device
202A first supply air tank (air source, fluid source)
202B second supply air tank (air source, fluid source)
203A first brake cylinder (first brake device)
203B second brake cylinder (second brake device)
205A first input port (input port)
205B second input port (input port)
206A first pilot pressure port (pilot pressure port)
206B second pilot pressure port (pilot pressure port)
210 tube seat
210a plate-shaped member
211A channel connecting between first input port and first relay valve (channel connecting between input port and relay valve)
211B channel connecting between second input port and second relay valve (channel connecting between input port and relay valve)
212A channel connecting between first pilot pressure port and first relay valve (channel connecting between pilot port and relay valve)
212B channel connecting between second pilot pressure port and second relay valve (channel connecting between pilot port and relay valve)
220A first relay valve (relay valve)
220B second relay valve (relay valve)
301 dehumidification device
305 dehumidification unit inlet
306 dehumidification unit outlet
310 housing
310a plate-shaped member
311 channel
410 tube seat
411 plate-shaped member having first thickness
412 plate-shaped member having second thickness
420 channel
430 sump
510 tube seat
511 plate-shaped member having first thickness
512 plate-shaped member having second thickness
520 channel
A to W channel

## Claims

1. A brake control device (1), comprising:
a tube seat (10) having at least one input port (5) through which a fluid is input from a fluid source (2); and
a regulating valve (30-35) for regulating a flow rate or a pressure of the fluid input through the at least one input port (5) to output a fluid for operating a brake device (3),
**characterized in that**
the tube seat (10) is formed of a plurality of plate-shaped members (11-17, 20-24) metal-joined to each other and laminated, and a channel (A-W) connecting between the at least one input port (5) and the regulating valve (30-35) is formed by the plurality of plate-shaped members (11-17, 20-24).

2. The brake control device (1) of claim 1,
wherein the plurality of plate-shaped members (11-17, 20-24) include a plate-shaped member (21-24) having a first thickness and a plate-shaped member (11-17, 20) having a second thickness larger than the first thickness, and
wherein the channel (A-W) is formed by the plate-shaped member (21-24) having the first thickness and the plate-shaped member (11-17, 20) having the second thickness stacked alternately.

3. The brake control device (1) of claim 2, wherein the plate-shaped member having the second thickness (412) includes a sump (430) recessed in a thickness direction from a joint surface between the plate-shaped member (412) having the second thickness and the plate-shaped member (411) having the first thickness.

4. The brake control device (1) of any one of claims 1 to 3, wherein the plurality of plate-shaped members (11-17, 20-24) include:
a plate-shaped member (14) having a first channel (A) extending in an in-plane direction;
a plate-shaped member (16) having a second channel (B) extending in an in-plane direction; and
a plate-shaped member (15) provided between the plate-shaped member (14) having the first channel (A) and the plate-shaped member (16) having the second channel (B) and having only a hole connecting between one end of the first channel (A) and one end of the second channel (B).

5. The brake control device (1) of any one of claims 1 to 4, wherein the plurality of plate-shaped members (11-17, 20-24) include:
a plate-shaped member (13) having a first hole (B13);
a plate-shaped member (15) having a second hole (B15); and
a plate-shaped member (14) provided between the plate-shaped member (13) having the first hole (B13) and the plate-shaped member (15) having the second hole (B15) and having a third channel (B14) connecting between the first hole (B13) and the second hole (B15).

6. The brake control device (1) of any one of claims 1 to 5,
wherein the regulating valve (50, 51) is a pilot pressure regulating valve (50. 51) that regulates, based on a pressure of a fluid spring (50d, 51d) that receives a load of a vehicle, a pressure of the fluid input through the at least one input port (5) and outputs a pilot pressure, and
wherein a channel (A) connecting between the at least one input port (5) and the pilot pressure regulating valve (50, 51) is formed by the plurality of plate-shaped members (14, 15, 16, 17, 22, 23).

7. The brake control device (1) of claim 6,
wherein the tube seat (10) further includes a fluid spring port (6) through which the pressure of the fluid spring (50d, 51d) that receives the load of the vehicle is input,
wherein the brake control device (1) further includes a fluid spring pressure sensor (43) for sensing a pressure of a fluid input through the fluid spring port (6), and
wherein a channel (R) connecting between the fluid spring port (6) and the fluid spring pressure sensor (43) and a channel (A) connecting between the at least one input port (5) and the pilot pressure regulating valve (50, 51) are formed by the plurality of plate-shaped members (11-17, 21-23).

8. The brake control device (1) of claim 7, wherein the pilot pressure regulating valve (30, 31) and the fluid spring pressure sensor (41, 43) are fixed to a same side of the tube seat (10).

9. The brake control device (1) of claim 7 or 8,
wherein the brake control device (1) further includes a pilot pressure sensor (42B) for sensing the pilot pressure output by the pilot pressure regulating valve (50, 51),
wherein a channel (M) connecting between the pilot pressure regulating valve (50, 51) and the pilot pressure sensor (42B) is formed by the plurality of plate-shaped members (11-17, 20-24), and
wherein the pilot pressure sensor (42B) and the fluid spring pressure sensor (41, 43) are fixed to a same side of the tube seat (10).

10. The brake control device (1) of any one of claims 6 to 9, wherein outermost one (11, 17) of the plurality of plate-shaped members (11-17, 20-24) has a valve fastener (10a) for mounting the pilot pressure regulating valve (50, 51).

11. The brake control device (1) of any one of claims 6 to 10,
wherein the brake control device (1) further includes a pilot pressure sensor (42B) for sensing the pilot pressure output by the pilot pressure regulating valve (50, 51), and
wherein outermost one (20) of the plurality of plate-shaped members (11-17, 20-24) has a sensor fastener (10b) for mounting the pilot pressure sensor (42B).

12. The brake control device (1) of any one of claims 6 to 11,
wherein the brake control device (1) further includes a pilot pressure sensor (42B) for sensing the pilot pressure output by the pilot pressure regulating valve (50, 51), and
wherein the pilot pressure regulating valve (30, 31) and the pilot pressure sensor (42B) are fixed to a same side of the tube seat (10).

13. The brake control device (1) of any one of claims 6 to 12,
wherein the brake control device (1) further includes a pilot pressure sensor (42B) for sensing the pilot pressure output by the pilot pressure regulating valve (50, 51)
wherein the plurality of plate-shaped members include:
a plate-shaped member (20) having a sensor fastener (10b) for mounting the pilot pressure sensor (42B); and
a plate-shaped member (24) having a fourth channel (M) connecting between the pilot pressure regulating valve (50, 51) and the pilot pressure sensor (42B), and
wherein the plate-shaped member (20) having the sensor fastener (10b) is formed of a metal having a higher corrosion resistance than a metal forming the plate-shaped member (24) having the fourth channel (M).

14. The brake control device (201) of any one of claims 1 to 5,
wherein the brake control device (201) further includes at least one pilot pressure port (206) through which a pilot pressure is input,
wherein the regulating valve (220) comprises at least one relay valve (220) that regulates the flow rate or the pressure of the fluid input through the at least one input port (205) in accordance with the pilot pressure input through the at least one pilot pressure port (206), and
wherein a channel (211) connecting between the at least one input port (205) and the at least one relay valve (220) and a channel (212) connecting between the at least one pilot pressure port (206) and the at least one relay valve (220) are formed by the plurality of plate-shaped members (210a).

15. The brake control device (201) of claim 14,
wherein the at least one relay valve (220) comprises:
a first relay valve (220A) configured to output a fluid to a first brake device (203A) for braking a first wheel of a bogie; and
a second relay valve (220B) configured to output a fluid to a second brake device (203B) for braking a second wheel of the bogie that is different from the first wheel,
wherein the at least one input (205) port comprises:
a first input port (205A) for inputting the fluid from the fluid source (202A) to the first relay valve (220A); and
a second input port (205B) for inputting the fluid from the fluid source (202B) to the second relay valve (220B),
wherein the at least one pilot pressure port (206) comprises:
a first pilot pressure port (206A) for inputting the pilot pressure to the first relay valve (220A); and
a second pilot pressure port (206B) for inputting the pilot pressure to the second relay valve (220B), and
wherein a channel (211A) connecting between the first input port (205A) and the first relay valve (220A), a channel (212A) connecting between the first pilot pressure port (206A) and the first relay valve (220A), a channel (211B) connecting between the second input port (205B) and the second relay valve (220B), and a channel (212B) connecting between the second pilot pressure port (206B) and the second relay valve (220B) are formed by the plurality of plate-shaped members (210a).

16. The brake control device (201) of claim 15,
wherein the first relay valve (220A) and the second relay valve (220B) are spaced apart from each other in a front-rear direction of the bogie, and
wherein the channel (211A) connecting between the first input port (205A) and the first relay valve (220A) detours around the second relay valve (220B).

17. A method of manufacturing a brake control device (1), comprising:
a tube seat manufacturing step of manufacturing a tube seat (10) having an input port (5) through which a fluid is input from a fluid source (2); and
a fixing step of fixing a regulating valve (30-35) and a pressure sensor (41-43) to the tube seat (10), the regulating valve (30-35) being configured to regulate a flow rate or a pressure of the fluid input through the input port (5) to output a fluid for operating a brake device (3),
**characterized in that**
in the tube seat manufacturing step, a plurality of plate-shaped members (11-17, 20-24) are laminated and metal-joined to each other, and a channel (A-W) connecting between the input port (5) and the regulating valve (30-35) is formed by the plurality of plate-shaped members (11-17, 20-24), and
in the fixing step, the regulating valve (30-35) and the pressure sensor (41-43) are fastened to a surface of the tube seat (10) with bolts.

## Patentansprüche

1. Bremssteuerungsvorrichtung (1), umfassend:
einen Rohrsitz (10) mit mindestens einem Eingangsanschluss (5), durch den ein Fluid von einer Fluidquelle (2) eingeführt wird; und
ein Steuerventil (30-35) zum Steuern eines Volumenstroms oder eines Drucks des Fluids, das durch den mindestens einen Eingangsanschluss (5) eingeführt wird, um ein Fluid zum Betätigen einer Bremsvorrichtung (3) abzugeben,
**dadurch gekennzeichnet, dass**
der Rohrsitz (10) aus einer Mehrzahl von plattenförmigen Elementen (11-17, 20-24) gebildet ist, die metallisch miteinander verbunden und laminiert sind, und ein Durchgang (A-W), der den mindestens einen Eingangsanschluss (5) mit dem Steuerventil (30-35) verbindet, durch die Mehrzahl von plattenförmigen Elementen (11-17, 20-24) gebildet ist.

2. Bremssteuerungsvorrichtung (1) nach Anspruch 1,
wobei die Mehrzahl von plattenförmigen Elementen (11-17, 20-24) ein plattenförmiges Element (21-24) mit einer ersten Dicke und ein plattenförmiges Element (11-17, 20) mit einer zweiten Dicke, die größer als die erste Dicke ist, umfasst, und
wobei der Durchgang (A-W) durch das plattenförmige Element (21-24) mit der ersten Dicke und das plattenförmige Element (11-17, 20) mit der zweiten Dicke, die abwechselnd gestapelt sind, gebildet ist.

3. Bremssteuerungsvorrichtung (1) nach Anspruch 2, wobei das plattenförmige Element mit der zweiten Dicke (412) eine Nut (430) umfasst, die in einer Dickenrichtung von einer Verbindungsfläche zwischen dem plattenförmigen Element mit der zweiten Dicke (412) und dem plattenförmigen Element mit der ersten Dicke (411) zurückgesetzt ist.

4. Bremssteuerungsvorrichtung (1) nach einem der Ansprüche 1 bis 3, wobei die Mehrzahl von plattenförmigen Elemente (11-17, 20-24) umfasst:
ein plattenförmiges Element (14) mit einem ersten Durchgang (A), der sich in einer Richtung innerhalb der Ebene erstreckt;
ein plattenförmiges Element (16) mit einem zweiten Durchgang (B), der sich in einer Richtung innerhalb der Ebene erstreckt; und
ein plattenförmiges Element (15), das zwischen dem plattenförmigen Element (14) mit dem ersten Durchgang (A) und dem plattenförmigen Element (16) mit dem zweiten Durchgang (B) vorgesehen ist und nur ein Loch aufweist, das ein Ende des ersten Durchgangs (A) mit einem Ende des zweiten Durchgangs (B) verbindet.

5. Bremssteuerungsvorrichtung (1) nach einem der Ansprüche 1 bis 4, wobei die Mehrzahl von plattenförmigen Elementen (11-17, 20-24) umfasst:
ein plattenförmiges Element (13) mit einem ersten Loch (B13);
ein plattenförmiges Element (15) mit einem zweiten Loch (B15); und
ein plattenförmiges Element (14), das zwischen dem plattenförmigen Element (13) mit dem ersten Loch (B13) und dem plattenförmigen Element (15) mit dem zweiten Loch (B15) vorgesehen ist und einen dritten Durchgang (B14) aufweist, der eine Verbindung zwischen dem ersten Loch (B13) und dem zweiten Loch (B15) herstellt.

6. Bremssteuerungsvorrichtung (1) nach einem der Ansprüche 1 bis 5,
wobei das Steuerventil (50, 51) ein Vorsteuerdruckregelventil (50, 51) ist, das basierend auf einem Druck einer Fluidfeder (50d, 51d), die eine Last eines Fahrzeugs aufnimmt, einen Druck des Fluids steuert, das durch den mindestens einen Eingangsanschluss (5) eingeführt wird, und einen Vorsteuerdruck abgibt, und
wobei ein Durchgang (A), der den mindestens einen Eingangsanschluss (5) mit dem Vorsteuerdruckregelventil (50, 51) verbindet, durch die Mehrzahl von plattenförmigen Elementen (14, 15, 16, 17, 22, 23) gebildet ist.

7. Bremssteuerungsvorrichtung (1) nach Anspruch 6,
wobei der Rohrsitz (10) ferner einen Fluidfederanschluss (6) umfasst, durch den der Druck der Fluidfeder (50d, 51d), die die Last des Fahrzeugs aufnimmt, eingeführt wird,
wobei die Bremssteuerungsvorrichtung (1) ferner einen Fluidfederdrucksensor (43) zum Erfassen eines Drucks eines Fluids umfasst, das durch den Fluidfederanschluss (6) eingeführt wird, und
wobei ein Durchgang (R), der den Fluidfederanschluss (6) mit dem Fluidfederdrucksensor (43) verbindet, und ein Durchgang (A), der den mindestens einen Eingangsanschluss (5) mit dem Vorsteuerdruckregelventil (50, 51) verbindet, durch die Mehrzahl von plattenförmigen Elementen (11-17, 21-23) gebildet sind.

8. Bremssteuerungsvorrichtung (1) nach Anspruch 7, wobei das Vorsteuerdruckregelventil (30, 31) und der Fluidfederdrucksensor (41, 43) auf der gleichen Seite des Rohrsitzes (10) befestigt sind.

9. Bremssteuerungsvorrichtung (1) nach Anspruch 7 oder 8,
wobei die Bremssteuerungsvorrichtung (1) ferner einen Vorsteuerdrucksensor (42B) zum Erfassen des von dem Vorsteuerdruckregelventil (50, 51) abgegebenen Vorsteuerdrucks umfasst,
wobei ein Durchgang (M), der eine Verbindung zwischen dem Vorsteuerdruckregelventil (50, 51) und dem Vorsteuerdrucksensor (42B) herstellt, durch die Mehrzahl von plattenförmigen Elementen (11-17, 20-24) gebildet ist, und
wobei der Vorsteuerdrucksensor (42B) und der Fluidfederdrucksensor (41, 43) an der gleichen Seite des Rohrsitzes (10) befestigt sind.

10. Bremssteuerungsvorrichtung (1) nach einem der Ansprüche 6 bis 9, wobei ein Äußerstes (11, 17) der Mehrzahl von plattenförmigen Elementen (11-17, 20-24) eine Ventilbefestigung (10a) zum Befestigen des Vorsteuerdruckregelventils (50, 51) aufweist.

11. Bremssteuerungsvorrichtung (1) nach einem der Ansprüche 6 bis 10,
wobei die Bremssteuerungsvorrichtung (1) ferner einen Vorsteuerdrucksensor (42B) zum Erfassen des von dem Vorsteuerdruckregelventil (50, 51) abgegebenen Vorsteuerdrucks umfasst, und
wobei ein Äußerstes (20) der Mehrzahl von plattenförmigen Elementen (11-17, 20-24) eine Sensorbefestigung (10b) zum Befestigen des Vorsteuerdrucksensors (42B) aufweist.

12. Bremssteuerungsvorrichtung (1) nach einem der Ansprüche 6 bis 11,
wobei die Bremssteuerungsvorrichtung (1) ferner einen Vorsteuerdrucksensor (42B) zum Erfassen des vom Vorsteuerdruckregelventil (50, 51) abgegebenen Vorsteuerdrucks umfasst, und
wobei das Vorsteuerdruckregelventil (30, 31) und der Vorsteuerdrucksensor (42B) auf der gleichen Seite des Rohrsitzes (10) befestigt sind.

13. Bremssteuerungsvorrichtung (1) nach einem der Ansprüche 6 bis 12,
wobei die Bremssteuerungsvorrichtung (1) ferner einen Vorsteuerdrucksensor (42B) zum Erfassen des vom Vorsteuerdruckregelventil (50, 51) abgegebenen Vorsteuerdrucks umfasst,
wobei die Mehrzahl von plattenförmigen Elementen Folgendes umfasst:
ein plattenförmiges Element (20) mit einer Sensorbefestigung (10b) zum Befestigen des Steuerdrucksensors (42B); und
ein plattenförmiges Element (24) mit einem vierten Durchgang (M), der eine Verbindung zwischen dem Vorsteuerdruckregelventil (50, 51) und dem Vorsteuerdrucksensor (42B) herstellt, und
wobei das plattenförmige Element (20) mit der Sensorbefestigung (10b) aus einem Metall gebildet ist, das eine höhere Korrosionsbeständigkeit aufweist als ein Metall, das das plattenförmige Element (24) mit dem vierten Durchgang (M) bildet.

14. Bremssteuerungsvorrichtung (201) nach einem der Ansprüche 1 bis 5,
wobei die Bremssteuerungsvorrichtung (201) ferner mindestens einen Vorsteuerdruckanschluss (206) umfasst, durch den ein Vorsteuerdruck eingegeben wird,
wobei das Steuerventil (220) mindestens ein Relaisventil (220) umfasst, das den Volumenstrom oder den Druck des durch den mindestens einen Eingangsanschluss (205) eingeführten Fluids in Übereinstimmung mit dem durch den mindestens einen Vorsteuerdruckanschluss (206) eingegebenen Vorsteuerdruck steuert, und
wobei ein Durchgang (211), der eine Verbindung zwischen dem mindestens einen Eingangsanschluss (205) und dem mindestens einen Relaisventil (220) herstellt, und ein Durchgang (212), der eine Verbindung zwischen dem mindestens einen Vorsteuerdruckanschluss (206) und dem mindestens einen Relaisventil (220) herstellt, durch die Mehrzahl von plattenförmigen Elementen (210a) gebildet sind.

15. Bremssteuerungsvorrichtung (201) nach Anspruch 14,
wobei das mindestens eine Relaisventil (220) Folgendes umfasst:
ein erstes Relaisventil (220A), das so konfiguriert ist, dass es ein Fluid an eine erste Bremsvorrichtung (203A) zum Bremsen eines ersten Rades eines Fahrwerks abgibt; und
ein zweites Relaisventil (220B), das so konfiguriert ist, dass es ein Fluid an eine zweite Bremsvorrichtung (203B) zum Bremsen eines zweiten Rades des Fahrwerks abgibt, das sich von dem ersten Rad unterscheidet,
wobei der mindestens eine Eingangsanschluss (205) Folgendes umfasst:
einen ersten Eingangsanschluss (205A) zum Einführen von Fluid von der Fluidquelle (202A) zu dem ersten Relaisventil (220A); und
einen zweiten Eingangsanschluss (205B) zum Einführen von Fluid von der Fluidquelle (202B) zu dem zweiten Relaisventil (220B),
wobei der mindestens eine Vorsteuerdruckanschluss (206) Folgendes umfasst:
einen ersten Vorsteuerdruckanschluss (206A) zum Eingeben des Vorsteuerdrucks in das erste Relaisventil (220A); und
einen zweiten Vorsteuerdruckanschluss (206B) zum Eingeben des Vorsteuerdrucks in das zweite Relaisventil (220B); und
wobei ein Durchgang (211A), der den ersten Eingangsanschluss (205A) mit dem ersten Relaisventil (220A) verbindet, ein Durchgang (212A), der den ersten Vorsteuerdruckanschluss (206A) mit dem ersten Relaisventil (220A) verbindet, ein Durchgang (211B), der den zweiten Eingangsanschluss (205B) mit dem zweiten Relaisventil (220B) verbindet, und ein Durchgang (212B), der den zweiten Vorsteuerdruckanschluss (206B) mit dem zweiten Relaisventil (220B) verbindet, durch die Mehrzahl von plattenförmigen Elementen (210a) gebildet sind.

16. Bremssteuerungsvorrichtung (201) nach Anspruch 15,
wobei das erste Relaisventil (220A) und das zweite Relaisventil (220B) in einer Vorwärts-Rückwärts-Richtung des Fahrwerks voneinander beabstandet sind, und
wobei der Durchgang (211A), der den ersten Eingangsanschluss (205A) mit dem ersten Relaisventil (220A) verbindet, das zweite Relaisventil (220B) umgeht.

17. Verfahren zur Herstellung einer Bremssteuerungsvorrichtung (1), umfassend:
einen Rohrsitzherstellungsschritt zum Herstellen eines Rohrsitzes (10) mit einem Eingangsanschluss (5), durch den ein Fluid von einer Fluidquelle (2) eingeführt wird; und
einen Befestigungsschritt zum Befestigen eines Steuerventils (30-35) und eines Drucksensors (41-43) an dem Rohrsitz (10), wobei das Steuerventil (30-35) konfiguriert ist, um einen Volumenstrom oder einen Druck des durch den Eingangsanschluss (5) eingeführten Fluids zu steuern, um ein Fluid zum Betätigen einer Bremsvorrichtung (3) abzugeben,
**dadurch gekennzeichnet, dass**
in dem Rohrsitzherstellungsschritt eine Mehrzahl von plattenförmigen Elementen (11-17, 20-24) laminiert und metallisch miteinander verbunden werden und ein Durchgang (A-W), der den Eingangsanschluss (5) mit dem Steuerventil (30-35) verbindet, durch die Mehrzahl von plattenförmigen Elementen (11-17, 20-24) gebildet wird, und
in dem Befestigungsschritt das Steuerventil (30-35) und der Drucksensor (41-43) mit Schrauben an einer Oberfläche des Rohrsitzes (10) befestigt werden.

## Revendications

1. Dispositif de commande de frein (1), comprenant :
un siège de tube (10) ayant au moins un orifice d'entrée (5) à travers lequel un fluide est entré à partir d'une source de fluide (2) ; et
une vanne de régulation (30-35) pour réguler un débit ou une pression du fluide entré à travers l'au moins un orifice d'entrée (5) pour délivrer en sortie un fluide afin de faire fonctionner un dispositif de frein (3),
**caractérisé en ce que**
le siège de tube (10) est formé d'une pluralité d'éléments en forme de plaque (11-17, 20-24) assemblés par métal les uns aux autres et laminés, et un canal (A-W) reliant l'au moins un orifice d'entrée (5) et la vanne de régulation (30-35) est formé par la pluralité d'éléments en forme de plaque (11-17, 20-24).

2. Dispositif de commande de frein (1) de la revendication 1,
dans lequel la pluralité d'éléments en forme de plaque (11-17, 20-24) comprend un élément en forme de plaque (21-24) ayant une première épaisseur et un élément en forme de plaque (11-17, 20) ayant une deuxième épaisseur plus grande que la première épaisseur, et
dans lequel le canal (A-W) est formé par l'élément en forme de plaque (21-24) ayant la première épaisseur et l'élément en forme de plaque (11-17, 20) ayant la deuxième épaisseur empilés en alternance.

3. Dispositif de commande de frein (1) de la revendication 2, dans lequel l'élément en forme de plaque ayant la deuxième épaisseur (412) comprend un carter (430) évidé dans une direction d'épaisseur à partir d'une surface d'assemblage entre l'élément en forme de plaque (412) ayant la deuxième épaisseur et l'élément en forme de plaque (411) ayant la première épaisseur.

4. Dispositif de commande de frein (1) de l'une quelconque des revendications 1 à 3, dans lequel la pluralité d'éléments en forme de plaque (11-17, 20-24) comprennent :
un élément en forme de plaque (14) ayant un premier canal (A) s'étendant dans une direction dans le plan ;
un élément en forme de plaque (16) ayant un deuxième canal (B) s'étendant dans une direction dans le plan ; et
un élément en forme de plaque (15) prévu entre l'élément en forme de plaque (14) ayant le premier canal (A) et l'élément en forme de plaque (16) ayant le deuxième canal (B) et ayant seulement un trou reliant une extrémité du premier canal (A) et une extrémité du deuxième canal (B).

5. Dispositif de commande de frein (1) de l'une quelconque des revendications 1 à 4, dans lequel la pluralité d'éléments en forme de plaque (11-17, 20-24) comprennent :
un élément en forme de plaque (13) ayant un premier trou (B13) ;
un élément en forme de plaque (15) ayant un deuxième trou (B15) ; et
un élément en forme de plaque (14) prévu entre l'élément en forme de plaque (13) ayant le premier trou (B13) et l'élément en forme de plaque (15) ayant le deuxième trou (B15) et ayant un troisième canal (B14) reliant le premier trou (B13) et le deuxième trou (B15).

6. Dispositif de commande de frein (1) de l'une quelconque des revendications 1 à 5,
dans lequel la vanne de régulation (50, 51) est une vanne de régulation de pression pilote (50, 51) qui régule, sur la base d'une pression d'un ressort fluidique (50d, 51d) qui reçoit une charge d'un véhicule, une pression du fluide entré à travers l'au moins un orifice d'entrée (5) et délivre en sortie une pression pilote, et
dans lequel un canal (A) reliant l'au moins un orifice d'entrée (5) et la vanne de régulation de pression pilote (50, 51) est formé par la pluralité d'éléments en forme de plaque (14, 15, 16, 17, 22, 23).

7. Dispositif de commande de frein (1) de la revendication 6,
dans lequel le siège de tube (10) comprend en outre un orifice de ressort fluidique (6) à travers lequel la pression du ressort fluidique (50d, 51d) qui reçoit la charge du véhicule est entrée,
dans lequel le dispositif de commande de frein (1) comprend en outre un capteur de pression de ressort fluidique (43) pour détecter une pression d'un fluide entré à travers l'orifice de ressort fluidique (6), et
dans lequel un canal (R) reliant l'orifice de ressort fluidique (6) et le capteur de pression de ressort fluidique (43) et un canal (A) reliant l'au moins un orifice d'entrée (5) et la vanne de régulation de pression pilote (50, 51) sont formés par la pluralité d'éléments en forme de plaque (11-17, 21-23).

8. Dispositif de commande de frein (1) de la revendication 7, dans lequel la vanne de régulation de pression pilote (30, 31) et le capteur de pression de ressort fluidique (41, 43) sont fixés sur un même côté du siège de tube (10).

9. Dispositif de commande de frein (1) de la revendication 7 ou 8,
dans lequel le dispositif de commande de frein (1) comprend en outre un capteur de pression pilote (42B) pour détecter la pression pilote délivrée en sortie par la vanne de régulation de pression pilote (50, 51),
dans lequel un canal (M) reliant la vanne de régulation de pression pilote (50, 51) et le capteur de pression pilote (42B) est formé par la pluralité d'éléments en forme de plaque (11-17, 20-24), et
dans lequel le capteur de pression pilote (42B) et le capteur de pression de ressort fluidique (41, 43) sont fixés sur un même côté du siège de tube (10).

10. Dispositif de commande de frein (1) de l'une quelconque des revendications 6 à 9, dans lequel l'élément (11, 17) le plus à l'extérieur de la pluralité d'éléments en forme de plaque (11-17, 20-24) a une attache de vanne (10a) pour monter la vanne de régulation de pression pilote (50, 51).

11. Dispositif de commande de frein (1) de l'une quelconque des revendications 6 à 10,
dans lequel le dispositif de commande de frein (1) comprend en outre un capteur de pression pilote (42B) pour détecter la pression pilote délivrée en sortie par la vanne de régulation de pression pilote (50, 51), et
dans lequel l'élément (20) le plus à l'extérieur de la pluralité d'éléments en forme de plaque (11-17, 20-24) a une attache de capteur (10b) pour monter le capteur de pression pilote (42B).

12. Dispositif de commande de frein (1) de l'une quelconque des revendications 6 à 11,
dans lequel le dispositif de commande de frein (1) comprend en outre un capteur de pression pilote (42B) pour détecter la pression pilote délivrée en sortie par la vanne de régulation de pression pilote (50, 51), et
dans lequel la vanne de régulation de pression pilote (30, 31) et le capteur de pression pilote (42B) sont fixés sur un même côté du siège de tube (10).

13. Dispositif de commande de frein (1) de l'une quelconque des revendications 6 à 12,
dans lequel le dispositif de commande de frein (1) comprend en outre un capteur de pression pilote (42B) pour détecter la pression pilote délivrée en sortie par la vanne de régulation de pression pilote (50, 51)
dans lequel la pluralité d'éléments en forme de plaque comprend :
un élément en forme de plaque (20) ayant une attache de capteur (10b) pour monter le capteur de pression pilote (42B) ; et
un élément en forme de plaque (24) ayant un quatrième canal (M) reliant la vanne de régulation de pression pilote (50, 51) et le capteur de pression pilote (42B), et
dans lequel l'élément en forme de plaque (20) ayant l'attache de capteur (10b) est formé d'un métal ayant une résistance à la corrosion plus élevée qu'un métal formant l'élément en forme de plaque (24) ayant le quatrième canal (M).

14. Dispositif de commande de frein (201) de l'une quelconque des revendications 1 à 5,
dans lequel le dispositif de commande de frein (201) comprend en outre au moins un orifice de pression pilote (206) à travers lequel une pression pilote est entrée,
dans lequel la vanne de régulation (220) comprend au moins une vanne relais (220) qui régule le débit ou la pression du fluide entré à travers l'au moins un orifice d'entrée (205) conformément à la pression pilote entrée à travers l'au moins un orifice de pression pilote (206), et
dans lequel un canal (211) reliant l'au moins un orifice d'entrée (205) et l'au moins une vanne relais (220) et un canal (212) reliant l'au moins un orifice de pression pilote (206) et l'au moins une vanne relais (220) sont formés par la pluralité d'éléments en forme de plaque (210a).

15. Dispositif de commande de frein (201) de la revendication 14,
dans lequel l'au moins une vanne relais (220) comprend :
une première vanne relais (220A) configurée pour délivrer en sortie un fluide à un premier dispositif de frein (203A) pour freiner une première roue d'un bogie ; et
une deuxième vanne relais (220B) configurée pour délivrer en sortie un fluide à un deuxième dispositif de frein (203B) pour freiner une deuxième roue du bogie qui est différente de la première roue,
dans lequel l'au moins un orifice d'entrée (205) comprend :
un premier orifice d'entrée (205A) pour faire entrer le fluide depuis la source de fluide (202A) dans la première vanne relais (220A) ; et
un deuxième orifice d'entrée (205B) pour faire entrer le fluide depuis la source de fluide (202B) dans la deuxième vanne relais (220B),
dans lequel l'au moins un orifice de pression pilote (206) comprend :
un premier orifice de pression pilote (206A) pour aire entrer la pression pilote dans la première vanne relais (220A) ; et
un deuxième orifice de pression pilote (206B) pour faire entrer la pression pilote dans la deuxième vanne relais (220B), et
dans lequel un canal (211A)reliant le premier orifice d'entrée (205A) et la première vanne relais (220A), un canal (212A) reliant le premier orifice de pression pilote (206A) et la première vanne relais (220A), un canal (211B) reliant le deuxième orifice d'entrée (205B) et la deuxième vanne relais (220B), et un canal (212B) reliant le deuxième orifice de pression pilote (206B) et la deuxième vanne relais (220B) sont formés par la pluralité d'éléments en forme de plaque (210a).

16. Dispositif de commande de frein (201) de la revendication 15,
dans lequel la première vanne relais (220A) et la deuxième vanne relais (220B) sont espacées l'une de l'autre dans une direction avant-arrière du bogie, et
dans lequel le canal (211A) reliant le premier orifice d'entrée (205A) et la première vanne relais (220A) contourne la deuxième vanne relais (220B).

17. Procédé de fabrication d'un dispositif de commande de frein (1), comprenant :
une étape de fabrication de siège de tube consistant à fabriquer un siège de tube (10) ayant un orifice d'entrée (5) à travers lequel un fluide est entré à partir d'une source de fluide (2) ; et
une étape de fixation consistant à fixer une vanne de régulation (30-35) et un capteur de pression (41-43) sur le siège de tube (10), la vanne de régulation (30-35) étant configurée pour réguler un débit ou une pression du fluide entré à travers l'orifice d'entrée (5) pour délivrer en sortie un fluide afin de faire fonctionner un dispositif de frein (3),
**caractérisé en ce que**
lors de l'étape de fabrication de siège de tube, une pluralité d'éléments en forme de plaque (11-17, 20-24) sont laminés et assemblés par métal les uns aux autres, et un canal (A-W) reliant l'orifice d'entrée (5) et la vanne de régulation (30-35) est formé par la pluralité d'éléments en forme de plaque (11-17, 20-24), et
lors de l'étape de fixation, la vanne de régulation (30-35) et le capteur de pression (41-43) sont attachés à une surface du siège de tube (10) avec des boulons.
